(19) Europäisches Patentamt
European Patent Office
Office européen des brevets

(11) **EP 3 268 405 B1**

(12) **EUROPÄISCHE PATENTSCHRIFT**

(45) Veröffentlichungstag und Bekanntmachung des Hinweises auf die Patenterteilung:
**25.10.2023   Patentblatt 2023/43**

(21) Anmeldenummer: **16709060.4**

(22) Anmeldetag: **10.03.2016**

(51) Internationale Patentklassifikation (IPC):
*C08G 59/50* (2006.01)    *C08G 18/48* (2006.01)
*C08G 18/50* (2006.01)    *C08G 18/66* (2006.01)
*C08G 18/76* (2006.01)    *C08G 18/79* (2006.01)
*C09D 171/02* (2006.01)   *C08G 18/32* (2006.01)

(52) Gemeinsame Patentklassifikation (CPC):
**C08G 18/4825; C08G 18/3206; C08G 18/4829; C08G 18/4837; C08G 18/4841; C08G 18/4895; C08G 18/5024; C08G 18/6674; C08G 18/7664; C08G 18/797; C08G 59/504; C09D 171/02**

(86) Internationale Anmeldenummer:
**PCT/EP2016/055095**

(87) Internationale Veröffentlichungsnummer:
**WO 2016/142452 (15.09.2016 Gazette 2016/37)**

(54) **VERFAHREN ZUR HERSTELLUNG KOMPAKTER POLYURETHANE MIT VERBESSERTER HYDROLYSESTABILITÄT**

METHOD FOR PREPARING COMPACT POLYURETHANES WITH IMPROVED HYDROLYTIC STABILITY

PROCÉDÉ DE FABRICATION DE POLYURÉTHANE COMPACT AYANT UNE STABILITÉ EN HYDROLYSE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2015   EP 15158590**

(43) Veröffentlichungstag der Anmeldung:
**17.01.2018   Patentblatt 2018/03**

(73) Patentinhaber: **BASF SE**
**67056 Ludwigshafen am Rhein (DE)**

(72) Erfinder:
• **KAMM, Andre**
  **49163 Bohmte (DE)**
• **THOMAS, Hans-Josef**
  **41352 Korschenbroich (DE)**

(56) Entgegenhaltungen:
**WO-A1-2011/161047    US-A- 4 647 624**
**US-A- 5 057 556    US-B2- 6 723 821**

**Beschreibung**

Die vorliegende Erfindung betrifft ein Verfahren zur Herstellung eines Polyurethans, umfassend die Umsetzung einer Zusammensetzung (Z1) mindestens umfassend eine gegenüber Isocyanaten reaktive Verbindung (P1), und einer Zusammensetzung (Z2), mindestens umfassend ein Polyisocyanat, wobei die Verbindung (P1) erhältlich oder erhalten ist durch die Umsetzung mindestens eines Polyepoxids mit einer Verbindung (V1) ausgewählt aus der Gruppe bestehend aus Polyetheraminen und Polyetherolen. Weiter betrifft die vorliegende Erfindung Polyurethane, erhältlich oder erhalten nach einem derartigen Verfahren sowie die Verwendung eines erfindungsgemäßen Polyurethans zur Beschichtung von Rohrleitungen, als "field joint" oder von Unterwassertechnik (subsea equipment) wie beispielsweise "christmas tree" für den Off-Shore-Bereich sowie als Glas-syntaktisches Polyurethan.

Polyurethane finden in unterschiedlichsten Bereichen Anwendung. Für diese unterschiedlichen Bereiche werden Polyurethane mit ihren Eigenschaften maßgeschneidert, so dass diese in der Verarbeitung oder Anwendung optimale Eigenschaften liefern.

So werden Polyurethane beispielsweise für Beschichtungen von Formkörpern eingesetzt, auch für die Beschichtung von Rohrleitungen.

Bei der Förderung von Erdöl aus dem Meer werden vermehrt Erdölvorkommen aus großen Tiefen gefördert. Das Erdöl solcher Förderstätten besitzt eine Temperatur von größer 100 °C (bis 150 °C). Dieses Öl wird mittels Pipelines von der Off-Shore-Förderstätte auf das Festland gepumpt. Um den Wärmeverlust des Öls zu reduzieren, und dadurch das Ausfallen von Wachen aus dem Öl bei einem Förderstop zu vermeiden, ist die Pipeline üblicherweise mit einer Beschichtung aus Polyurethan versehen.

Durch die immer tieferen Bohrungen und die dadurch resultierende höhere Temperatur des Öls werden die Pipelinecoatings einer immer höheren Wärmebelastung ausgesetzt. Diese Wärmebelastung unter Wasser erfordert eine verbesserte Hydrolysestabilität der Beschichtung.

WO 2005/056629 beschreibt ein Verfahren zur Herstellung eines mit Glashohlkugeln gefüllten Polyurethans, um den Wärmeverlust einer Ölpipeline zu reduzieren. Dabei werden in WO 2005/056629 bevorzugt aromatische Isocyanate verwendet. Nachteil solcher Polyetherpolyurethane auf Basis von aromatischen Isocyanaten ist, dass die Urethanbindung bei höheren Temperaturen ebenfalls hydrolysieren kann.

Um diesen Nachteil zu umgehen, offenbaren z.B. WO 2007/042411, WO 99/03922 und WO 2010/003788 Beschichtungen auf Basis von Polyisocyanuraten. Diese haben den Vorteil einer besseren Temperaturstabilität. Die Hydrolysestabilität bei hohen Temperaturen ist allerdings nur bedingt besser gegenüber normalen Polyurethanen. Ferner haben die Systeme den Nachteil, besonders schnell zu reagieren, sodass eine Füllung von großen Volumen nur schwer zu realisieren ist. Ebenso sind Polyisocyanurate aufgrund der großen Vernetzung durch den Isocyanuratring relativ spröde.

WO 2011/161047 offenbart ein Verfahren, bei dem ein höher funktionelles, hochmolekulares Polyol in Kombination mit einem Epoxidharz verwendet wird. Der Nachteil dieses Verfahrens ist, dass die höherfunktionellen, hochmolekularen Polyole hohe Viskositäten aufweisen und schwierig herzustellen sind. Ferner können die in WO 2011/161047 beschriebenen Materialien keine ausreichende Langzeit-Hydrolysestabilität bei den geforderten Temperaturen liefern.

US 4,647,624 offenbart Reaktionen von einem Polyetherol mit einem Polyepoxid, wobei weitere Einsatzstoffe zur Herstellung eines Polymerpolyols eingesetzt werden. Die erhaltenen Polymerpolyole werden wiederum mit Isocyanaten umgesetzt, wobei auch die Herstellung von Polyurethanschäumen offenbart wird. Ausweislich Beispiel 2 der US 4,647,624 soll sich ein Epoxy-Addukt bilden. Berechnungen zeigen jedoch, dass unter den in Beispiel 2 der US 4,647,624 genannten Bedingungen keine Reaktion der Komponenten stattgefunden haben kann, die eingesetzten Edukte werden lediglich gemischt.

In WO 2012/030339 wird ein Verfahren beschrieben, um die generelle schlechte Langzeit-Hydrolysestabilität von Polyurethanelastomeren zu vermeiden. Dabei offenbart WO 2012/030339 ein Epoxidmaterial mit guten mechanischen Eigenschaften, welches eine Hydrolysestabilität von 160 °C aufweist. Die eingesetzten Rohstoffe bzw. Umsetzungsprodukte für die Herstellung solcher elastomerer Epoxidharze sind dem Fachmann bekannt und werden beispielsweise in EP 0 510 265 beschrieben. Dem Fachmann sind die Nachteile des in WO 2012/030339 offenbarten Verfahrens ersichtlich. Die Verarbeitung dieser Epoxidmaterialien erweist sich als schwierig, da diese Materialien bei höheren Temperaturen verarbeitet und gehärtet werden müssen. Da in der Regel die Verarbeitung im Feld oder auf hoher See stattfindet, ist dies schwierig zu bewerkstelligen. Ferner weisen die Materialien lange Entformzeiten auf, welches sich in der Anwendung als wenig wirtschaftlich erweist.

Eine der vorliegenden Erfindung zugrundeliegende Aufgabe war es, Materialien bereitzustellen, die eine verbesserte Hydrolysestabilität bei hohen Temperaturen aufweisen. Eine weitere der vorliegenden Erfindung zugrundeliegende Aufgabe war es, Materialien bereitzustellen, die eine verbesserte Hydrolysestabilität bei hohen Temperaturen aufweisen und gleichzeitig den hohen mechanischen Anforderungen in der Öl- und Gasindustrie genügen. Eine weitere der Erfindung zugrundeliegende Aufgabe war es, Beschichtungen aus diesen Materialien bereitzustellen.

Erfindungsgemäß wird diese Aufgabe gelöst durch ein Verfahren zur Herstellung eines Polyurethans, umfassend die Umsetzung mindestens der folgenden Komponenten:

(i) Zusammensetzung (Z1) mindestens umfassend eine gegenüber Isocyanaten reaktive Verbindung (P1), und
(ii) Zusammensetzung (Z2), mindestens umfassend ein Polyisocyanat,

wobei die Verbindung (P1) erhältlich oder erhalten ist durch die Umsetzung mindestens eines Polyepoxids mit einer Verbindung (V1) ausgewählt aus der Gruppe bestehend aus Polyetheraminen und Polyetherolen, wobei beim Einsatz von Polyetherolen ein Katalysator eingesetzt wird, und wobei das Verhältnis der NH- bzw. OH-Gruppen zu Epoxidgruppen im Bereich von 1:1,5 bis 1:75 liegt.

Das erfindungsgemäße Verfahren umfasst die Umsetzung mindestens einer Zusammensetzung (Z1) und einer Zusammensetzung (Z2). Die Zusammensetzung (Z1) umfasst dabei mindestens eine gegenüber Isocyanaten reaktive Verbindung (P1), die erhältlich oder erhalten ist durch die Umsetzung mindestens eines Polyepoxids mit einer Verbindung (V1) ausgewählt aus der Gruppe bestehend aus Polyetheraminen und Polyetherolen. Zusammensetzung (Z2) umfasst mindestens ein Polyisocyanat.

Erfindungsgemäß können auch weitere Komponenten, beispielsweise weitere gegenüber Isocyanaten reaktive Verbindungen, wie beispielsweise Polyole, Kettenverlängerer oder Additive eingesetzt werden. Gemäß einer weiteren Ausführungsform betrifft die vorliegende Erfindung daher ein Verfahren zur Herstellung eines Polyurethans wie zuvor beschrieben, wobei bei der Umsetzung neben den Komponenten (i) und (ii) mindestens eine der folgenden Komponenten eingesetzt wird:

(iii) eine weitere gegenüber Isocyanaten reaktive Verbindung,
(iv) ein Kettenverlängerer,
(v) weitere Additive.

In dem erfindungsgemäßen Verfahren wird eine gegenüber Isocyanaten reaktive Verbindung (P1) eingesetzt, die erhältlich ist oder erhalten wird durch die Umsetzung mindestens eines Polyepoxids mit einer Verbindung (V1) ausgewählt aus der Gruppe bestehend aus Polyetheraminen und Polyetherolen. Die Verbindung (P1) ist somit erhältlich oder wird erhalten durch die Umsetzung mindestens eines Polyepoxids mit einem Polyetheramin oder durch die Umsetzung mindestens eines Polyepoxids mit einem Polyetherol. Erfindungsgemäß wird die Verbindung (P1) als Umsetzungsprodukt mindestens eines Polyepoxids mit einem Polyetheramin oder als Umsetzungsprodukt mindestens eines Polyepoxids mit einem Polyetherol erhalten. Erfindungsgemäß ist es möglich, dass die Verbindung (P1) isoliert wird, bevor sie in der Zusammensetzung (Z1) eingesetzt wird.

Es wurde überraschenderweise gefunden, dass durch den Einsatz eines Umsetzungsproduktes auf Basis eines Polyetheramins oder Polyetherols mit einem Polyepoxid als Polyolkomponente in der Polyurethanformulierung ähnliche Hydrolysestabilitäten wie in WO 2012/030339 offenbarten reinen Epoxyelastomeren realisiert werden können, aber die verarbeitungstechnischen Vorteile von Polyurethan weiterhin genutzt werden können.

Die Umsetzungsprodukte aus Polyetheramin oder Polyetherol und Polyepoxiden besitzen bevorzugt eine theoretisch berechnete OH-Zahl von 0,5 mg KOH/g bis 75 mg KOH/g berechnet nach der nachfolgenden Formel:

$$OH = \frac{\frac{M_A}{EW} \cdot 56100 \frac{mg\ KOH}{eq}}{(M_A + M_B)}$$

mit:

OH: theoretisch berechnete OH-Zahl des erfindungsgemäßen Umsetzungsproduktes in mg KOH/g
$M_A$: Masse an eingesetztem Polyetheramin, Polyol oder Mischungen in g
$M_B$: Masse an eingesetztem Epoxidharz oder Epoxidmischung in g
EW: Aminoäquivalentgewicht bzw. OH-äquivalentgewicht des eingesetzten Polyetheramin oder Polyols oder Polyetheraminmischung bzw. Polyolmischung in g/eq

Besonders bevorzugt weisen die erfindungsgemäßen Umsetzungsprodukte eine theoretisch berechnete OH-Zahl von 5 mg KOH/g bis 65 mg KOH/g auf, weiter bevorzugt von 10 mg KOH/g bis 55 mg KOH/g und ganz besonders bevorzugt von 15 mg KOH/g bis 50 mg KOH/g.

Dabei werden eventuell vorhandene OH-Gruppen des Epoxidharzes in dieser Berechnung und Definition nicht berücksichtigt.

Gemäß einer weiteren Ausführungsform betrifft die vorliegende Erfindung ein Verfahren zur Herstellung eines Polyurethans wie zuvor beschrieben, wobei die Verbindung (P1) eine theoretisch berechnete OH-Zahl im Bereich von 0,5 mg KOH/g bis 75 mg KOH/g aufweist.

Die erfindungsgemäßen Umsetzungsprodukte (P1) weisen ein Epoxyäquivalentgewicht im Bereich von 180 bis 5000 g/eq berechnet nach der folgenden Formel auf:

$$EEWP = \frac{(M_A + M_B)}{(\frac{M_B}{EEW} - \frac{M_A}{EW})}$$

EEWP: theoretisch berechnete Epoxyäquivalentgewicht des erfindungsgemäßen Umsetzungsproduktes g/eq
$M_A$: Masse an eingesetztem Polyetheramin, Polyol oder Mischungen in g
$M_B$: Masse an eingesetztem Epoxidharz oder Epoxidmischung in g
EW: Aminoäquivalentgewicht bzw. OH-Äquivalentgewicht des eingesetzten Polyetheramin, Polyols oder Mischungen in g/eq
EEW: Epoxyäquivalentgewicht des eingesetzten Epoxidharzes oder Epoxidmischung in g/eq

Gemäß einer weiteren Ausführungsform betrifft die vorliegende Erfindung demgemäß ein Verfahren zur Herstellung eines Polyurethans wie zuvor beschrieben, wobei die Verbindung (P1) ein theoretisch berechnetes Epoxyäquivalentgewicht im Bereich von 180 bis 5000 g/eq aufweist.

Wie ausgeführt, ist die erfindungsgemäße Verbindung (P1) erhältlich durch die Umsetzung mindestens eines Polyepoxids mit einem Polyetheramin oder durch die Umsetzung mindestens eines Polyepoxids mit einem Polyetherol.

Erfindungsgemäß ist das Verhältnis der NH- bzw. OH-Gruppen zu Epoxidgruppen im Bereich von 1:1,5 bis 1:75, bevorzugt im Bereich von 1:2 bis 1:50, besonders bevorzugt im Bereich von 1:2,5 bis 1:25 und ganz besonders bevorzugt im Bereich von 1:3 bis 1:15.

Geeignete Polyepoxide, Polyetheramine und Polyetherole sind dem Fachmann an sich bekannt. Die Herstellung der Umsetzungsprodukte von Polyetheraminen oder Polyetherolen mit Polyepoxiden kann wie dem Fachmann bekannt verlaufen. Dabei werden Polyepoxid oder Polyepoxidmischungen mit einen Polyetheramin, Polyol oder Mischungen aus Polyetheraminen und/oder Polyolen vermischt und ggf. ein Katalysator zugesetzt. Die Reaktion kann bei Einsatz von Polyetheraminen bei Raumtemperatur und ohne Katalysator erfolgen. Beim Einsatz von Polyetherole wird für die Reaktion ein entsprechender Katalysator benötigt. Bevorzugt wird die Reaktion bei 50 °C bis 180 °C durchgeführt, besonders bevorzugt zwischen 80 °C bis 150 °C und ganz besonders bevorzugt zwischen 90 °C und 130 °C.

Die im Rahmen der vorliegenden Erfindung eingesetzten Polyepoxide können beliebige Verbindungen sein. Dabei enthalten die Polyepoxide im Durchschnitt mehr als eine Epoxidgruppe, bevorzugt zwei oder mehr Epoxidgruppen. Geeignete Polyepoxide sind dem Fachmann aus der Literatur wie z.B. Handbook of Epoxy Resins (H. Lee, K. Neville, McGraw-Hill Book Company) bekannt.

Im Rahmen der vorliegenden Erfindung können die eingesetzten Epoxidverbindungen dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen, Hydrierungsprodukten dieser Phenole und/oder von Novolacken (Umsetzungsprodukte von ein- oder mehrwertigen Phenolen mit Aldehyden, insbesondere Formaldehyd in Gegenwart saurer Katalysatoren). Die Epoxyäquivalentgewichte (EEW) dieser Epoxidverbindungen liegen vorzugsweise zwischen 100 und 2000, insbesondere zwischen 170 und 250. Das Epoxyäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomeren-gemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxybenzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind im Rahmen der vorliegenden Erfindung geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin, Trimethylolpropan, Pentaerythrit, Isosorbid und Bis-(4-hydroxycyclohexyl)-2,2-propan genannt. Es können auch Polyglycidylether von alkoxylierten mehrwertigen Alkoholen verwendet werden.

Weiter können auch Polyglycidylester von Polycarbonsäuren eingesetzt werden, die durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhalten werden. Beispiele sind Adipinsäurediglycidylester, Phthalsäurediglycidylester und Hexahydrophthalsäurediglycidylester.

Solche Produkte werden von verschiedenen Herstellern unter den Handelsnamen Araldite©, D.E.R.©, Epilox© oder Baxxores© vertrieben. Besonders bevorzugt sind Bisphenol-A Epoxide und Bisphenol-F-Epoxide und Derivate davon, insbesondere Glycidylether, wie beispielsweise Diglycidylether-Bisphenol-A, und Mischungen mit den oben genannten aliphatischen Di- oder Triepoxiden.

Erfindungsgemäß können auch Mischungen verschiedener Polyepoxide eingesetzt werden, beispielsweise Mischungen aus zwei oder drei Polyepoxiden.

Erfindungsgemäß kann das Polyepoxid in reiner Form oder in Form einer Zusammensetzung enthaltend das Polyepoxid und mindestens ein Verdünner eingesetzt werden. Geeignete dem Fachmann bekannte Verdünner sind z.B. inreaktive Lösungsmittel wie Ethylacetat, Kohlenwasserstoffe, Reaktivverdünner wie lineare, niederviskose Di- oder Triepoxide, Weichmacher wie Phthalate oder Zitronensäureester. Ferner sollen als Verdünner im Rahmen dieser Erfindung auch niederviskose Reaktivverdünner wie z.B. Monoglycidether oder Diglycidether auf Basis von kurzkettigen Di- oder Triolen, wie z.B. 1,4-Butandiol, 1,6-Hexandiol, Trimethylolpropan, 1,4 Cyclohexandimethanol oder Polyoxypropylenglycol verstanden werden.

Auch Polyetheramine und Verfahren zu deren Herstellung sind dem Fachmann an sich bekannt. Vorzugsweise werden Polyetheramine eingesetzt, die ein Molekulargewicht im Bereich von 500 bis 30000 g/mol aufweisen. Solche Materialien sind kommerziell von verschiedenen Herstellern verfügbar. Beispielsweise seien genannt Jeffamin®-D 2000; Jeffamin®-D4000 Jeffamin®-T3000, Jeffamin®-T5000; Polyetheramin D 2000; Polyetheramin T 5000; Poly A 27-2000; Poly A 37-5000.

Gemäß einer weiteren Ausführungsform betrifft die vorliegende Erfindung ein Verfahren zur Herstellung eines Polyurethans wie zuvor beschrieben, wobei die Verbindung (V1) ein Polyetheramin mit einem Molekulargewicht im Bereich von 500 bis 30000 g/mol ist.

Besonders bevorzugt weisen die Polyetheramine ein Molekulargewicht im Bereich von 1000 bis 15000 g/mol auf, und ganz besonders bevorzugt ein Molekulargewicht im Bereich von 1500 bis 10000 g/mol.

Neben dem Molekulargewicht kann auch das Aminoäquivalentgewicht (AEW), welches dem Fachmann bekannt ist, als Beschreibung der Polyetheramine genutzt werden. Dieses kann mittels Titration oder rechnerisch ermittelt werden. Dabei haben die eingesetzten Polyetheramine bevorzugt ein Aminoäquivalentgewicht im Bereich von 80 bis 7500 g/eq, besonders bevorzugt im Bereich von 150 bis 3750 g/eq und ganz besonders bevorzugt ein Aminoäquivalentgewicht im Bereich von 250 bis 2500 g/eq.

Erfindungsgemäß kann auch mindestens ein Polyetherol eingesetzt werden.

Vorzugsweise weisen die Polyetherole ein zahlenmittleres Molekulargewicht im Bereich von 500 bis 30000 g/mol, besonders bevorzugt von größer 500 g/mol bis kleiner 12.000 g/mol und insbesondere von 600 g/mol bis 8.000 g/mol auf.

Neben dem Molekulargewicht kann auch die OH-Zahl, welche dem Fachmann bekannt ist, für die Beschreibung der Polyetherole genutzt werden. Diese kann mittels Titration oder rechnerisch ermittelt werden. Dabei haben die eingesetzten Polyetherole bevorzugt eine OH-Zahl im Bereich von 5 bis 650 mg KOH/g, besonders bevorzugt im Bereich von 10 bis 600 mg KOH/g und ganz besonders bevorzugt im Bereich von 15 bis 500 mg KOH/g.

Die Bestimmung des Molekulargewichts kann anhand Gelpermeationschromatographie oder durch die Bestimmung der OH-Zahl (bzw. des Aminoäquivalentgewicht) des Polyols (bzw. Polyetheramins) und anschließender Umrechnung erfolgen. Entsprechende Methoden sind gemäß DIN 16945 beschrieben.

Gemäß einer weiteren Ausführungsform betrifft die vorliegende Erfindung ein Verfahren zur Herstellung eines Polyurethans wie zuvor beschrieben, wobei die Verbindung (V1) ein Polyetherol mit einem Molekulargewicht im Bereich von 500 bis 30000 g/mol ist.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid oder Borfluorid-Etherat oder durch Basen wie z.B. Kaliumhydroxid aus einem oder mehreren Alkylenoxiden mit 2 bis 4 Kohlenstoffatomen im Alkylenrest. Geeignete Alkylenoxide sind beispielsweise, 1,3-Propylenoxid, 1,2- bzw. 2,3-Butylenoxid und vorzugsweise Ethylenoxid und 1,2-Propylenoxid. Des Weiteren kann Tetrahydrofuran Monomer eingesetzt werden. Weiter können als Katalysatoren auch Multimetallcyanidverbindungen, so genannte DMC-Katalysatoren, eingesetzt werden. Die Alkylenoxide können einzeln, alternierend nacheinander oder als Mischungen verwendet werden. Bevorzugt werden 1,2-Propylenoxid und Mischungen aus 1,2-Propylenoxid und Ethylenoxid, wobei das Ethylenoxid in Mengen von 1 bis 50 % eingesetzt wird und weiter bevorzugt als Ethylenoxid-Endblock eingesetzt wird ("EO-cap"), so dass die entstehenden Polyole zu über 70 % primäre OH-Endgruppen aufweisen.

In einer besonders bevorzugten Ausführungsform werden Mischungen von Startermolekülen verwendetet, so dass die mittlere Anzahl an reaktiven Wasserstoffatome der Startermoleküle zwischen 2 bis 6 liegt.

Als Startermolekül kommen vorzugsweise Wasser oder 2- bis 8-wertige Alkohole, wie Ethylenglykol, 1,2- und 1,3-Propandiol, Diethylenglykol, Dipropylenglykol, 1,4-Butandiol, Glycerin oder Trimethylolpropan, Pentaerythrit, Zuckeralkohole wie Sorbitol oder Zucker wie Saacherose, aminische Verbindungen wie z.B. Ethylendiamin, Diethanolamin oder Toluoldiamin oder Mischungen der Startermoleküle in Betracht.

Die besonders bevorzugten Polyetherpolyole, vorzugsweise Polyoxypropylen-polyoxyethylenpolyole oder Polyoxypropylen-polyole, besitzen vorzugsweise eine Funktionalität von 1,5 bis 5,8, bevorzugt eine Funktionalität von 1,7 bis 5 und ganz besonders bevorzugt eine Funktionalität von 1,85 bis 4,5 und zahlenmittlere Molekulargewichte von 1.000 g/mol bis 12.000 g/mol (bzw. eine OH-Zahl von 7 bis 325 mg KOH/g), vorzugsweise von 1.500 g/mol bis 8.000 g/mol (bzw. eine OH-Zahl von 12 bis 190 mg KOH/g), insbesondere von 2.000 g/mol bis 6.000 g/mol (bzw. eine OH-Zahl von 17 bis 125 mg/KOH).

Als Polyisocyanate können aliphatische, cycloaliphatische, araliphatische und/oder aromatische Diisocyanate eingesetzt werden. Im Einzelnen seien beispielhaft die folgenden aromatischen Isocyanate genannt: 2,4-Toluylen-diisocyanat, Gemische aus 2,4- und 2,6-Toluylen-diisocyanat, 4,4'-, 2,4'- und/oder 2,2'-Diphenylmethan-diisocyanat (MDI), Gemische aus 2,4'- und 4,4'-Diphenylmethan-diisocyanat, urethan-, carbodiimid- oder uretonim-modifizierte flüssige 4,4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat oder Prepolymere aus diesen Isocyanaten und Polyolen oder Isocyanaten und isocyanatreaktiven Komponenten verwendet werden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI) 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat oder Prepolymere dieser Isocyanate.

Bevorzugt werden erfindungsgemäß aromatische Polyisocyanate oder Prepolymere aus aromatischen Polyisocyanaten eingesetzt. Gemäß einer weiteren Ausführungsform betrifft die vorliegende Erfindung daher ein Verfahren zur Herstellung eines Polyurethans wie zuvor beschrieben, wobei das Polyisocyanat ein aromatisches Polyisocyanat ist.

Polyisocyanatprepolymere sind erhältlich, indem vorstehend beschriebene Polyisocyanate im Überschuss, beispielsweise bei Temperaturen von 30 bis 150 °C, bevorzugt bei Temperaturen von 50 bis 120 °C und ganz besonders bevorzugt bei etwa 80 °C, mit Polyolen zum Prepolymer umgesetzt werden. Vorzugsweise werden zur Herstellung der erfindungsgemäßen Prepolymere Polyisocyanate und handelsübliche Polyole auf Basis von Polyestern, beispielsweise ausgehend von Adipinsäure, oder Polyethern, beispielsweise ausgehend von Ethylenoxid und/oder Propylenoxid, verwendet. Besonders bevorzugt werden Polyetherole verwendet.

Polyole sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole die oben beschriebenen polymeren Verbindungen mit gegenüber Isocyanate reaktiven Wasserstoffatomen eingesetzt. Besonders bevorzugt werden als Polyole Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind grundsätzlich aus dem Stand der Technik bekannt. Besonders bevorzugt wird als Kettenverlängerer 1,4-Butandiol, Dipropylenglycol und/oder Tripropylenglycol eingesetzt. Vorzugsweise wird dabei das Verhältnis von organischen Polyisocyanaten zu Polyolen und Kettenverlängerern so gewählt, dass das Isocyanatprepolymer einen NCO-Gehalt von 2 bis 33,5 %, bevorzugt 10 bis 32 %, weiter bevorzugt von 12 bis 30 % und ganz besonders bevorzugt einen NCO-Gehalt von 15 bis 28 % aufweist.

Gemäß einer besonders bevorzugten Ausführungsform der Erfindung enthält die Isocyanatkomponente oder das Isocyanatprepolymer einen Anteil von carbodiimid-modifizierten 4,4'-MDI von mindestens 2,5 Gew.-%, bevorzugt von mindestens 7,5 Gew.-% und ganz besonders bevorzugt von mindestens 12,5 Gew.-% und kleiner 30 Gew.-%. Dabei wird der Anteil von carbodiimid-modifizierten 4,4'-MDI bezogen auf das eingesetzte Isocyanat in der Isocyanatkomponente oder im Isocyanatprepolymeren.

Gemäß einer weiteren Ausführungsform betrifft die vorliegende Erfindung ein Verfahren zur Herstellung eines Polyurethans wie zuvor beschrieben, wobei das Polyisocyanat einen NCO-Gehalt von 2 bis 33,5 % aufweist.

Erfindungsgemäß kann das Polyisocyanat in reiner Form oder in Form einer Zusammensetzung z.B. einem Isocyanatprepolymer verwendet werden. In einer weiteren Ausführungsform kann eine Mischung enthaltend Polyisocyanat und mindestens ein Lösungsmittel eingesetzt werden. Geeignete Lösungsmittel sind dem Fachmann bekannt.

Erfindungsgemäß ist es auch möglich, dass neben der Verbindung (P1) weitere gegenüber Isocyanaten reaktive Verbindungen, beispielsweise weitere Polyole, eingesetzt werden.

Beispielsweise können weitere Polyetherole oder Polyesterole eingesetzt werden. Geeignete Polyetherole sind insbesondere die zuvor Genannten.

Geeignete Polyesterpolyole sind dem Fachmann an sich bekannt. Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250 °C, vorzugsweise 180 bis 220 °C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die eingesetzten Polyesterpolyole besitzen vorzugsweise eine Funktionalität von 2 bis 4, insbesondere von 2 bis 3, und beispielsweise ein zahlenmittleres Molekulargewicht von 480 bis 3000 g/mol, vorzugsweise 1000 bis 3000 g/mol.

Ganz besonders bevorzugt werden im Rahmen der vorliegenden Erfindung als weitere Polyolkomponente nur Polyetherole eingesetzt.

Erfindungsgemäß können weitere Komponenten eingesetzt werden, wie z.B. Kettenverlängerer, Vernetzungsmittel, Hilfs- und Zusatzstoffe oder Additive wie z.B. oberflächenaktive Substanzen, Farbstoffe, Pigmente, Oxidationsschutzmittel, UV-Schutzmittel, Wasserfänger, Katalysatoren, Latentwärmespeicher und Mikrohohlkugeln, Entschäumer, Hydrolyseschutzmittel. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Als Kettenverlängerungsmittel und/oder Vernetzungsmittel werden Substanzen mit einem Molekulargewicht von vorzugsweise kleiner 450 g/mol, besonders bevorzugt von 60 bis 400 g/mol eingesetzt, wobei Kettenverlängerer zwei gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400 g/mol, besonders bevorzugt von 60 bis 300 g/mol und insbesondere 60 bis 150 g/mol eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Ferner können als Kettenverlängerer auch aromatische Amine wie z.B. Diethyltoluoldiamin, 3,3'-Dichloro-4,4'-diaminodiphenylmethan, 3,5-Diamino-4-chlorisobutylbenzoat, 4-Methyl-2,6-bis(methylthio)-1,3-diaminobenzol, Trimethylenglykol-di-p-aminobenzoat verwendet werden. Solche aromatischen aminischen Kettenverlängerer sind von verschiedenen Herstellern zu beziehen und dem Fachmann meist auch unter diversen Abkürzungen wie z.B. MOCA, MBOCA, MCDEA, DETA bekannt. Besonders bevorzugt werden als Kettenverlängerer Monoethylenglycol, 1,4-Butandiol, Diethylengylcol, Glycerin, Trimethylolpropan oder Mischungen davon eingesetzt.

Erfindungsgemäß wird das Verfahren so geführt, dass bei der Verwendung von aminischen Kettenverlängern eine Umsetzung des Kettenverlängerers überwiegend mit dem Isocyanat erfolgt und eine Reaktion des Kettenverlängerers mit der Verbindung (P1) nur in geringem Maß oder gar nicht erfolgt. Solche Verfahren sind dem Fachmann bekannt, beispielsweise kann die Zudosierung des aminischen Kettenverlängerers erst in der Mischkammer erfolgen. Solche Verfahren sind natürlich auch mit anderen Kettenverlängerern möglich.

In einer bevorzugten Ausführungsform der Erfindung liegt der Anteil an Kettenverlängerer in der Zusammensetzung (Z1) im Bereich von 0 und 35 Gew.-%, bevorzugt im Bereich von 5 und 30 Gew.-% und ganz besonders bevorzugt im Bereich von 7,5 und 25 Gew.-%.

Gegebenenfalls können Hilfs- und Zusatzstoffe zugesetzt werden. Hier seien beispielsweise oberflächenaktive Substanzen, Farbstoffe, Pigmente, Hydrolyseschutzstabilisatoren, Oxidationsschutzmittel, UV-Schutzmittel, Wasserfänger, Katalysatoren, Latentwärmespeicher und Mikroholkugeln genannt.

Werden als Zusatzstoffe Mikroholkugeln eingesetzt, so wird das resultierende Polyurethan auch als Glassyntaktisches Polyurethan bezeichnet.

Als Katalysatoren zur Herstellung der Polyurethanformkörper werden bevorzugt Verbindungen verwendet, welche die Reaktion der Hydroxylgruppen enthaltenden Verbindungen der Komponente Z1 mit den organischen, gegebenenfalls modifizierten Polyisocyanaten (Z2) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin.

Ebenso kommen organische Metallverbindungen in Betracht. Bevorzugt werden organische Metallverbindungen auf Basis von Zinn, Zink, Bismuth, Titan, Zirkonium, Mangan, Eisen, Kobalt, Kupfer, Aluminium verwendet. Beispielsweise seinen genannt organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismutoctanoat, Titanverbindungen wie beispielsweise Titan-IV-(triethanolamito)isopropxide oder Titan-IV--bis(triethanolamito)diisopropxide oder Mischungen diverser Metallverbindungen. Die organischen Metallverbindungen können allein oder in Kombination mit stark basischen Aminen eingesetzt werden. Bevorzugt werden ausschließlich organische Metallverbindungen als Katalysatoren für die Reaktion von Z1 und Z2 verwendet.

In einer bevorzugten Ausführungsform der Erfindung liegt der Anteil an Katalysatoren in der Zusammensetzung (Z1) im Bereich von 0,00001 Gew.-% bis 5 Gew.-%, bevorzugt im Bereich von 0,0001 Gew-% bis 2 Gew.-% und ganz besonders bevorzugt im Bereich von 0,0005 Gew.-% und 1 Gew.-%.

Unter dem Begriff Mikrohohlkugeln sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Die mineralischen Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweise weisen die organischen oder mineralischen Hohlkugeln einen Durchmesser von 1 bis 1000 $\mu$m, bevorzugt von 5 bis 200 $\mu$m auf. Üblicherweise weisen die organischen oder mineralischen Hohlkugeln eine Schüttdichte von 0,1 bis 0,5 g/cm$^3$ auf. Sie besitzen im Allgemeinen eine Wärmeleitfähigkeit von 0,03 bis 0,12 W/mK.

Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite® Glass Bubbles verwendet werden.

Als Latentwärmespeicher können verkapselte und nicht verkapselte, lipophile Substanzen mit einem fest/flüssig-Übergang oberhalb von 20 °C, meist Wachse, eingesetzt werden. Diese können in einem Polymer verkapselt vorliegen. Bei laufender Rohölförderung nehmen die Latentwärmespeicher Wärme des warmen Rohöls auf und schmelzen. Bei einem kurzzeitigen Produktionsstopp kühlt die Isolierschicht von außen her langsam ab, wobei sich auch die lipophile Füllung der Latentwärmespeicher abkühlt, verfestigt und dabei die aufgenommenen Wärme wieder an das Rohöl abgibt. Ähnliche Lösungen sind in DE 10256550, WO 2004/003424, US 6,000,438, WO 2002/016733 oder CN 101545565 beschrieben.

Ferner ist es möglich, als Hilfs- und Zusatzstoffe aus dem Stand der Technik bekannte Treibmittel wie beispielsweise Wasser, Pentan, Cyclopentan etc. zuzusetzen. Es ist jedoch bevorzugt, dass kein Treibmittel eingesetzt wird, insbesondere, dass kein Wasser zugesetzt wird.

Ferner ist es besonders bevorzugt, wenn der Restwassergehalt der Edukte durch Zusatz von Wasserfängern reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente eingesetzt.

Zur Herstellung der erfindungsgemäßen Polyurethanreaktionsmischung werden die Zusammensetzung (Z1) und die Zusammensetzung (Z2) in solchen Mengen zur Umsetzung gebracht, dass das Äquivalenzverhältnis von NCO-Gruppen der Isocyanatgruppen zur Summe der reaktiven Wasserstoffatome in einem bestimmten Bereich befindet. Der Fachmann verwendet den Ausdruck "Index" oder "Kennzahl". Dieser spiegelt das molare Verhältnis der NCO-Gruppen zu den reaktiven Wasserstoffatomen wieder. Ein Index von 100 entspricht hier einem Verhältnis von 1 : 1. Bei einem Index von größer 100 liegt ein molarer Überschuss von Isocyanaten vor, bei einem Index von kleiner 100 liegt ein Überschuss von reaktiven Wasserstoffatomen vor. Bevorzugt liegt der Index zwischen 50 und 2500, besonders bevorzugt zwischen 60 und 350, ganz besonders bevorzugt zwischen 85 und 130 und insbesondere zwischen 90 und 115.

Gemäß der obigen Definition, werden die vorhandenen Epoxidgruppen der erfindungsgemäßen Verbindung (V1) nicht mit in die Berechnung des Index oder Kennzahl mit einbezogen.

Die Ausgangskomponenten werden üblicherweise bei einer Temperatur von 5 °C bis 120 °C, bevorzugt 10 °C bis 80 °C, weiter bevorzugt 20 °C bis 60 °C gemischt und zur Reaktion gebracht.

Die vorliegende Erfindung beschreibt auch die Verwendung einer Verbindung (P1) erhältlich oder erhalten durch die Umsetzung mindestens eines Polyepoxids mit einer Verbindung (V1) ausgewählt aus der Gruppe bestehend aus Polyetheraminen und Polyetherolen zur Herstellung von Polyurethanen, wobei beim Einsatz von Polyetherolen ein Katalysator eingesetzt wird, und wobei das Verhältnis der NH- bzw. OH-Gruppen zu Epoxidgruppen im Bereich von 1:1,5 bis 1:75 liegt.

Wie ausgeführt, werden mit dem erfindungsgemäßen Verfahren Polyurethane erhalten, die eine besonders gute Hydrolysestabilität aufweisen, insbesondere eine gute Hydrolysestabilität bei hohen Temperaturen.

Gemäß einer weiteren Ausführungsform betrifft die vorliegende Erfindung ein Polyurethan wie zuvor beschrieben, wobei das Polyurethan ein Gießelastomer ist. Diese können Anwendung in den verschiedensten technischen Bereichen finden, beispielsweise als Minensiebe, Räder und Rollen, Walzenbeschichtungen etc..

Gemäß einem weiteren Aspekt betrifft die vorliegende Erfindung ein Polyurethan, erhältlich oder erhalten nach einem Verfahren zur Herstellung eines Polyurethans wie zuvor beschrieben.

Gemäß einer weiteren Ausführungsform betrifft die vorliegende Erfindung ein Polyurethan wie zuvor beschrieben, wobei das Polyurethan ein kompaktes Polyurethan ist.

Die erfindungsgemäßen Polyurethane eignen sich insbesondere zur Beschichtung von Rohrleitungen, field joint und für Unterwassertechnik (subsea equipment).

Sofern, wie oben beschrieben, keine Treibmittel eingesetzt werden, erhält man als erfindungsgemäßes Produkt kompakte Polyurethane und keine Polyurethanschaumstoffe. Geeignete Reaktionsbedingungen bzw. Herstellungsverfahren für Herstellung der Polyurethane oder der Beschichtungen sind dem Fachmann an sich bekannt

Die Vermischung der Komponenten kann mit den üblichen Verarbeitungsmaschinen erfolgen. In einer bevorzugten Ausführungsform erfolgt die Vermischung durch Niederdruckmaschinen oder Hochdruckmaschinen. Dabei können die zu beschichtenden Teile entweder über das Formgie-ßen hergestellt werden oder mittels eines Rotationsverfahrens. Bevorzugt wird jedoch das Formgießen verwendet. Dabei wird die Reaktionsmischung in eine Form gegossen, welche das zu Beschichtende Element, zum Beispiel das Rohr enthält. Nach dem Aushärten des Polyurethans wird die Form entfernt. Das Material kann direkt verwendet werden. In einer besonderen Ausführungsform der Erfindung wird das beschichtete Teil noch einer Wärmebehandlung unterzogen.

Beim Rotationsgießverfahren erfolgt das Aufbringen der Reaktionsmischung durch Aufgießen auf das sich drehende Element, zum Beispiel das Pipelinerohr. Dabei wird die Reaktionsmischung mittels herkömmlicher Mischvorrichtungen, z.B. Niederdruckmischkopf, erhalten. In einer besonderen Ausführungsform erfolgt der Austrag über eine Breitschlitzdüse. Der Vorschub des Mischkopfs oder des Rohres wird im Allgemeinen so eingestellt, dass bei konstantem Ausstoß die gewünschte Dicke der Polyurethanschicht erreicht wird. Hierzu kann die Reaktionsmischung bevorzugt thixotropierende Additive enthalten, wodurch ein Herabtropfen des Reaktionsgemisches vom rotierenden Element verhindert wird.

Alternativ kann die Beschichtung indirekt erfolgen. Dazu wird die Reaktionsmischung der Komponenten in eine Form gegossen und anschließend entformt. Das so hergestellte Formteil wird dann auf das zu beschichtende Rohrelement aufgebracht, beispielsweise durch Verschrauben oder Verkleben.

Die Dicke der Polyurethanschicht beträgt vorzugsweise 5 bis 200 mm, besonders bevorzugt 10 bis 150 mm und insbesondere 20 bis 100 mm. Gegebenenfalls kann auf die Polyurethanschicht eine oder mehrere weitere Schichten, z.B. eine isolierende Schicht und/oder eine Deckschicht aus einem Thermoplasten aufgebracht werden. Vorzugsweise werden auf die Polyurethanschicht keine weiteren Schichten aufgebracht.

Die erfindungsgemäße Polyurethanbeschichtung zeichnet sich durch hervorragende mechanische Eigenschaften, wie Bruchdehnung und Zugfestigkeit sowie eine hervorragende Hydrolysestabilität aus.

Ein zu beschichtendes Element, beispielsweise ein Leitungselement, beispielsweise ein Rohr, kann ein unbeschichtetes Leitungselement aus Stahl sein, es können aber auch Leitungselemente eingesetzt werden, die bereits eine oder mehrere Lagen Beschichtung aufweisen. Vorzugsweise wird im Rahmen der vorliegenden Erfindung das Leitungselement direkt mit der erfindungsgemäßen Polyurethanreaktionsmischung beschichtet. Alternativ kann die erfindungsgemäße Polyurethanreaktionsmischung beispielsweise auch auf ein mit powder sprayed fusionbonded epoxy oder mit Polypropylen (oder auch Polyethylen) beschichtetes Leitungselement aufgebracht werden. Gegebenenfalls kann das Leitungselement auch bereits mit einer ersten Polyurethanschicht beschichtet sein, die beispielsweise Latentwärmespeicher enthält. Anschließend wird die Polyurethanreaktionsmischung zu einer Polyurethanschicht ausgehärtet, gegebenenfalls unter Wärmebehandlung, beispielsweise durch Bestrahlung oder in einem Ofen.

Als mit Polyurethan beschichtete Leitungselemente im Sinn der vorliegenden Erfindung sollen nicht nur klassische beschichtete Rohrbeschichtungen, sondern auch mit Polyurethan beschichtete Schweißbereiche von Rohrleitungen, so genannte "Field Joints", und mit Polyurethan beschichtete Gegenständen, die mit Rohrleitungen in Verbindung stehen, wie Muffen, Borlochanschlüsse, Eruptionskreuze, Rohrsammler, Pumpen und Bojen verstanden werden. Auch sollen Leitungselemente mit Polyurethan beschichtete Kabel, vorzugsweise Off-Shore-Kabel umfassen. Weiter schließt im Sinn der vorliegenden Erfindung ein mit Polyurethan beschichtetes Leitungselement auch Rohre mit ein, die Ummantelungen zur Verstärkung, wie Bend Stiffener oder Bend Restriktoren aufweisen, wobei die Bend Stiffener und die Bend Restriktoren der Polyurethanbeschichtung entsprechen. Vorzugsweise ist unter dem erfindungsgemäßen mit Polyurethan beschichteten Leitungselement ein Leitungselement einer Off-Shore-Pipeline oder ein Off-Shore-Kabel zu verstehen. Dabei bedeutet "Off Shore", dass diese Gegenstände bei üblicher Verwendung mit Meerwasser in Berührung kommen. Besonders bevorzugt ist das erfindungsgemäße, mit Polyurethan beschichtete Leitungselement ein mit Polyurethan beschichtetes Rohr einer Off-Shore-Pipeline, ein Field Joint einer Off-Shore-Pipeline oder ein Eruptionskreuz (auch als X-Mas Tree bezeichnet) einer Off-Shore-Pipeline, insbesondere einer Off-Shore-Pipeline zur Förderung von Rohöl.

Die Beschichtung der Teile kann wie ausgeführt direkt oder Indirekt erfolgen, wobei bei einer indirekten Beschichtung das Polyurethan separat hergestellt wird und dann durch z.B. Verschraubungen auf das zu beschichtende Element aufgebracht wird. Bevorzugt wird Polyurethan direkt auf die Oberfläche des zu beschichtenden Materials gegossen oder gesprüht. Im Allgemeinen bestehen die zu beschichtenden Oberflächen aus Metallen, wie Stahl, Eisen, Kupfer oder Aluminium oder aus Kunststoffen, wie z.B. Polypropylen oder Epoxidharzen. Zur besseren Haftung können noch gegebenenfalls übliche Haftvermittler, wie interne Haftvermittler, die den Polyurethankomponenten zugegeben werden, externe Haftvermittler, die direkt auf die zu beschichtende Fläche gegeben werden und/oder physikalische Haftvermittler verwendet werden. Auch kann die zu beschichtende Oberfläche, beispielsweise durch Beflammen oder Plasmabehandlung, vorbehandelt werden.

Demgemäß betrifft die vorliegende Erfindung gemäß einem weiteren Aspekt auch die Verwendung eines Polyurethans, erhältlich oder erhalten nach einem Verfahren zur Herstellung eines Polyurethans wie zuvor beschrieben, oder eines Polyurethans wie zuvor beschrieben zur Beschichtung von Rohrleitungen, als Pipelinecoating, Field joint oder christmas tree für den Off-Shore-Bereich.

Gemäß einem weiteren Aspekt betrifft die vorliegende Erfindung auch die Verwendung eines Polyurethans, erhältlich oder erhalten nach einem Verfahren zur Herstellung eines Polyurethans wie zuvor beschrieben, oder eines Polyurethans wie zuvor beschrieben als Glas-syntaktisches Polyurethan.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden soll die Erfindung anhand von Beispielen näher erläutert werden.

**Beispiele:**

**1. Einsatzstoffe**

Poly 1:   Jeffamin® T-403 Polyetheramin mit einem Molekulargewicht von etwa 440 g/mol, einen AHEW von 81 g/eq der Firma Huntsman

Poly 2:   Jeffamin® T-3000 Polyetheramin mit einem Molekulargewicht von etwa 3000 g/mol und eine AHEW von 530 g/eq der Firma Huntsman

Poly 3:   Jeffamin® T-5000 Polyetheramin mit einem Molekulargewicht von etwa 5000 g/mol und eine AHEW von 952 g/eq der Firma Huntsman

Poly 4:   Polyetheramin D-2000 der BASF mit einem Molekulargewicht von etwa 2000 g/mol und eine AHEW von

Poly 5: Jeffamin® D-4000 Polyetheramin mit einem Molekulargewicht von etwa 4000 g/mol und eine AHEW von 1000 g/eq der Firma Huntsman

Poly 6: Lupranol 2090 der Firma BASF Polyurethanes GmbH, ein trifunktionelles Polyol mit einer OH-Zahl von 28 mg KOH/g

Poly 7: Polyetherol auf Basis von Sorbitol, Propylenoxid und Ethylenoxid mit einem Ethylenoxidanteil von 10 Gew.-% und einer OH-Zahl von 43 mg KOH/g

Poly 8: Lupranol 1005/1 der Firma BASF Polyurethanes GmbH; Polyproylenglycol mit einem mittleren Molekulargewicht von 4000 g/mol und einer OH-Zahl von 28 mg KOH/g

Poly 9: Polyetherol auf Basis von Trimethylolpropan und Propylenoxid mit einer OH-Zahl von 860 mg KOH/g

Poly 10: Lupranol 1200 der Firma BASF Polyurethanes GmbH, Polyproylenglycol mit einem mittleren Molekulargewicht von 450 g/mol und einer OH-Zahl von 248 mg KOH/g

Poly 11: Lupranol 2010/1 der Firma BASF Polyurethanes GmbH, mit einer OH-Zahl von 45 mg KOH/g

Epoxid 1: EPON™ Resin 828 der Firma Momentive, ein 2 funktionelles Epoxidharz auf Basis von Bisphenol-A und Epichlorhydrin mit einen EEW von 185 g/eq

Epoxid 2: Araldite® GY 250 der Firma Huntsman, ein Epoxidharz auf Basis von Bisphenol-A und Epichlorhydrin mit einem EEW von 185 g/eq

Epoxid 3: Epilox® 13-21 der Firma Leuna Harze, ein Epoxid Reaktivverdünner auf Basis von 1,4-Butandiol und Epichlorhydrin mit einen EEW von 132 g/eq

Epoxid 4: Epilox® 13-31 der Firma Leuna Harze, ein Epoxid Reaktivverdünner auf Basis von Trimethylolpropan und Epichlorhydrin und einem EEW von 136 g/eq

Epoxid 5: Epilox® M 985 der Firma Leuna Harze, ein Diglycidether auf Basis von Polyoxyproplyen mit einem EEW von 460 g/eq

Epoxid 6: IPOX® RD 19 der Firma ipox chemicals, Polyoxypropylendiglycidether mit einem EEW von 315 g/eq

Epoxid 7: IPOX® RD 21 der Firma ipox chemicals, Poly(tetramethylenoxid)-diglycidylether mit einem EEW von 420 g/eq

Epoxid 8: Epilox® A 19-03 der Firma Leuna-Harze mit einem Epoxyäquivalentgewicht 190 g/eq

DL: Propylencarbonat

DF: Entschäumer

ZP: Zeolithpaste 50%ig in Polyol mit einer OH-Zahl von 80 mg KOH/g

KV1: 1,4-Butandiol

AV1: 2-Amino-1-Propanol bezogen über die Firma Aldrich

Kat 1: Lupragen N 201 der Firma BASF Polyurethanes GmbH

Kat 2: Fomrez UL 28 der Firma Momentive

Kat 3: 2,4,6-tris(dimethylaminomethyl)phenol bezogen über die Firma Aldrich

Kat 4: K-Kat XK 604 der Firma King Industries

Kat 5: Anchor® 1040 der Firma Air-Products

Kat 6: Tyzor® TE der Firma Dorf Ketal

ISO1: Lupranat MP 102 der Firma BASF Polyurethanes GmbH mit einem NCO-Gehalt von 23 %

ISO2: Lupranat M 20 der Firma BASF Polyurethanes GmbH mit einem NCO-Gehalt von 31,5 %

ISO3: Lupranat MM 103 der Firma BASF Polyurethanes GmbH, ein carbodiimidmodifiziertes 4,4'-Diphenylmethandiisocyanat mit einem NCO-Gehalt von 29,5 %

ISO4: ISO 134/7 der Firma Polyurethanes GmbH mit einem NCO-Gehalt von 26,2 %

ISO5: Mischung aus 30 % ISO 1 und 70 % ISO 2 mit einem NCO-Gehalt von 28,9 %

ISO6: Mischung von 50 % ISO 1 und 50 % ISO 3 mit einem NCO-Gehalt von 26,2 %

ISO7: Mischung aus 70 % ISO 1 und 30 % ISO 2 mit einem NCO-Gehalt von 25,5 %

**2. Allgemeine Vorschrift zur Herstellung der Umsetzungsprodukte aus Polyetheraminen und Polyepoxiden**

Für die Herstellung der Umsetzungsprodukte aus Polyetheraminen und Polyepoxiden werden in einen 4-Halskolben mit Rührer, Stickstoffeinleitung und Kühler zunächst die entsprechende Menge an Epoxidharz oder Epoxidmischung vorgelegt und dann die entsprechende Menge an Polyetheramin oder Polyetheraminmischungen zugeführt. Das Reaktionsgemisch wird langsam auf eine Temperatur von 125 °C aufgeheizt und für einen Zeitraum von mindestens 3h bei dieser Temperatur gehalten. Danach wird das Material auf etwa 60 °C - 80 °C abgekühlt und abgefüllt. In Tabelle 1a und 1 b sind einige Beispiele für erfindungsgemäße Umsetzungsprodukte aufgeführt.

Tabelle 1a

| | B1 | B2 | B3 | B4 | B5 | B6 | B7 | B8 |
|---|---|---|---|---|---|---|---|---|
| **Momentive Resin 828** | 88,1 | 78,7 | 78,7 | 64,9 | 64,9 | 48,1 | 52,6 | 35,7 |
| **Polyetheramin D 2000** | 11,9 | | 21,3 | | 35,1 | | 47,4 | |
| **Jeffamin D-4000** | | 21,3 | | 35,1 | | 51,9 | | 64,3 |
| **EEWP (berechnet)** | 221 | 247 | 261 | 317 | 356 | 481 | 528 | 777 |
| **OH-Zahl (berechnet)** | 13,4 | 11,9 | 23,9 | 19,7 | 39,4 | 29,1 | 53,2 | 36,1 |
| **Viskosität bei 50 °C [Pas]** | 1,82 | 1,89 | 3,21 | 2,90 | 8,36 | 5,36 | 34,9 | 13,21 |

Tabelle 1b

| | B9 | B10 | B11 | B12 | B13 | B14 | B15 | B16 |
|---|---|---|---|---|---|---|---|---|
| **Araldite GY 250** | 64,36 | 48,68 | 63,02 | 91,77 | 47,46 | | | |
| **Epoxid 3** | | | | | | 35,92 | | |
| **Epoxid 4** | | | | | | | 41,68 | |
| **Epoxid 7** | | | | | | | | 78,95 |
| **Polyetheramin D 2000** | 35,64 | | | | | | | |
| **Jeffamin D-4000** | | | | | 52,54 | | | |
| **Jeffamin T-5000** | | 51,32 | | | | 64,08 | 58,32 | 21,05 |
| **Jeffamin T-3000** | | | 36,98 | | | | | |
| **Jeffamin T-403** | | | | 8,23 | | | | |
| **EEWP (berechnet)** | 359 | 478 | 369 | 253 | 490 | 488 | 408 | 603 |
| **OH-Zahl (berechnet)** | 39 | 30 | 39 | 57 | 29 | 38 | 34 | 12 |

### 3. Versuche zur Stabilität bei feuchter Lagerung

Der Einsatz von Epoxiden von Bisphenol-A und Epichlorhydrin für Off-Shore-Anwendungen wird explizit in WO 2011/161047 und WO 2011/003529 als optionales Zusatzmittel beschrieben. Jedoch können in diesen Systemen nur geringe Mengen an Epoxidharzen eingesetzt werden, da das Epoxidharz nicht in Matrix eingebunden wird. Ferner führt der hohe Einsatz von Epoxidharzen zu einer Reduktion der Dehnung bei Lagerung in Wasser oder Wasserdampf und hohen Temperaturen. Ein normales Polyurethanelastomer ist bei feuchtwarmen Bedingungen unter erhöhten Temperaturen wenig stabil. Dies soll anhand der nachfolgenden Beispiele verdeutlicht werden.

Hierzu wurden zunächst die Bestandteile der Polyolkomponente (Polyole, Kettenverlängerer, Zeolithpaste, Entschäumer, erfindungsgemäße Umsetzungsprodukte aus Polyetheraminen oder Polyolen und Polyepoxiden etc.) mittels eines SpeedmixerTM der Firma Haunschild für 20 sec bei 800 RPM und 40 sec bei 2000 RPM gemischt und im Anschluss im Vakuum entgast. Der Mischung wurde dann die entsprechende Menge an entgaster Isocyanatkomponente zugesetzt und für 40 sec bei 2000 RPM im SpeedmixerTM gemischt. Die reaktive Mischung wurde dann in eine auf 70 °C beheizte Form gegeben, um Prüfplatten mit einer Dicke von 2 mm herzustellen. Nach 2 Stunden bei 70 °C wurden die Prüfplatten entformt und nach einer 7-tägigen Lagerung unter Normklima wurden aus diesen Prüfplatten Zugprüfstäbe ausgestanzt und die Zugfestigkeit und Dehnung gemäß DIN 53504 bestimmt. Ein weiterer Teil dieser Zugprüfstäbe wurde dann für 5, 10 bzw. 15 Stunden bei 130 °C in Wasserdampf gelagert und anschließend die Zugfestigkeit und Dehnung gemäß DIN 53504 bestimmt.

Die nachfolgende Tabelle 2 gibt die Zusammensetzung der Formulierungen und die Ergebnisse Prüfungen wieder.

Tabelle 2

| | V1 | V2 | B17 | B18 | B19 | V3 |
|---|---|---|---|---|---|---|
| **Poly 6** | 85,32 | | | | | |
| **Epoxid 1** | | 80,498 | | | | 86,500 |
| **Material aus B 9** | | | 80,498 | 86,500 | | |
| **Material aus B 10** | | | | | 86,500 | |
| **KV** | 13,00 | 17,000 | 17,000 | 11,000 | 11,000 | 11,000 |
| **ZP** | 1,50 | 2,000 | 2,000 | 2,500 | 2,500 | 2,500 |

(fortgesetzt)

| | V1 | V2 | B17 | B18 | B19 | V3 |
|---|---|---|---|---|---|---|
| DL | | 5,000 | 5,000 | | | |
| DF | | 0,500 | 0,500 | | | |
| Kat1 | 0,18 | | | | | |
| Kat2 | | 0,002 | 0,002 | 0,0005 | 0,0005 | 0,0005 |
| ISO 4 | X | | | X | X | X |
| ISO 5 | | X | X | | | |
| Index | 103 | 103 | 103 | 103 | 103 | 103 |
| **0h 130 °C/Wasserdampf** | | | | | | |
| Zugfestigkeit [MPa] | 16 | 20 | 28 | 21 | 18 | n.M. |
| Dehnung [%] | 490 | 90 | 80 | 140 | 120 | n.M. |
| **5h 130 °C/Wasserdampf** | | | | | | |
| Zugfestigkeit [MPa] | 10 | 52 | 33 | 28 | 22 | n.M. |
| Dehnung [%] | 390 | 5 | 50 | 150 | 130 | n.M. |
| **10h 130 °C/Wasserdampf** | | | | | | |
| Zugfestigkeit [MPa] | 6 | 24 | 36 | 28 | 22 | n.M. |
| Dehnung [%] | 220 | 2 | 40 | 120 | 130 | n.M. |
| **15h 130 °C/Wasserdampf** | | | | | | |
| Zugfestigkeit [MPa] | 4 | 23 | 37 | 27 | 25 | n.M. |
| Dehnung [%] | 110 | 1 | 40 | 130 | 150 | n.M. |

**n.M.** Messung nicht möglich, da Matetrial zu weich ist und sich nicht entformen ließ

Wie aus den Vergleichsbeispielen und den Beispielen ersichtlich ist, zeigt ein normales Polyurethanelastomer keine besondere Beständigkeit unter feuchten Bedingungen und hohen Temperaturen. Der Einsatz von hohen Konzentrationen von Epoxiden in den Beispiel V2 zeigt, dass die Materialien sehr stark an Dehnung verlieren. Ferner konnte in Beispiel V3 kein Material erhalten werden, welches zur Prüfung genutzt werden konnte. Das Material aus V3 war zu weich und konnte selbst nach 24-stündiger Härtung bei 70 °C nicht entformt werden. Dies verdeutlicht, dass hohe Konzentrationen an Epoxidharzen nicht ohne weiteres in ein Polyurethansystem genutzt werden können. Die erfindungsgemäßen Beispiele B17 - B 19 zeigen, dass die Materialien ausgezeichnete Eigenschaften unter feucht-warmen Bedingungen aufweisen ohne, dass die Dehnung unter ein kritisches Niveau sinkt. Ferner wird aus den Beispielen ersichtlich, dass durch die entsprechende Modifikation der Isocyanatprepolymeren sich die erfindungsgemäßen Systeme noch verbessern lassen bzw. sich Materialien realisieren lassen, welche mit dem reinen Epoxidharzen nicht möglich sind.

**4. Versuche - Lagerung unter feuchten Bedingungen**

Die in WO 2011/161047 offenbarten Systeme, welche eine Konzentration an Epoxidharzen von 2 bis 15 Gew.-%, bezogen auf die Polyolkomponente aufweisen, zeigen ebenfalls bei langfristiger Lagerung in künstlichen Seewasser (gemäß ASTM D1141-98 "Standard Practice for the Preparation of Substitute Ocean Water) bei erhöhten Temperaturen ebenfalls eine schlechte Hydrolysestabilität. Um den negativen Einfluss von hohen Konzentrationen an Epoxidharzen in den Formulierungen zu umgehen, könnte der Fachmann vorschlagen Epoxidharze auf Basis von Polyetherolen und Epichlorhydrin zu verwenden. Diese Materialien weisen jedoch negative Eigenschaften auf, welches in den nachfolgenden Beispielen verdeutlicht werden soll.

Hierzu wurden zunächst die Bestandteile der Polyolkomponente (Polyole, Kettenverlängerer, Zeolithpaste, Entschäumer, erfindungsgemäße Umsetzungsprodukte aus Polyetheraminen oder Polyolen und Epoxiden etc.) mittels eines SpeedmixerTM der Firma Haunschild für 20 sec bei 800 RPM und 40 sec bei 2000 RPM gemischt und im Anschluss im Vakuum entgast. Der Mischung wurde dann die entsprechende Menge an entgaster Isocyanatkomponente zugesetzt und für 40 sec bei 2000 RPM im SpeedmixerTM gemischt. Die reaktive Mischung wurde dann in eine auf 70 °C beheizte Form gegeben, um Prüfplatten mit einer Dicke von 2 mm herzustellen. Nach 2 Stunden bei 70 °C wurden die Prüfplatten entformt und nach einer 7-tägigen Lagerung unter Normklima wurden aus diesen Prüfplatten Zugprüfstäbe ausgestanzt und die Zugfestigkeit und Dehnung gemäß DIN 53504 bestimmt. Ein weiterer Teil dieser Zugprüfstäbe wurde dann in künstlichem Seewasser in einem Druckbehälter bei 120 °C gelagert und in bestimmten Abständen wurden Zugprüfstäbe entnommen und die Zugfestigkeit und Dehnung im frisch entnommenen Zustand bestimmt. Ferner wurde ebenfalls die Zugfestigkeit der Materialien im getrockneten Zustand bestimmt. Hierzu wurden die Zugprüfstäbe nach der Entnahme aus dem künstlichen Seewasser für mindestens 16 Stunden bei 40 °C getrocknet und anschließend für weitere 2 Stunden unter Normklima konditioniert.

Die nachfolgenden Tabellen 4a und 4b geben Aufschluss über die Ergebnisse. Die Zusammensetzung ergibt sich aus Tabellen 3a und 3b. Wie aus den Versuchen V6 - V 8 ersichtlich, zeigen die hohen Konzentrationen an Epoxidharzen auf Basis von Polyetherolen und Epichlorhydrin eine schlechte Verträglichkeit mit dem Polyurethansystem. Das Epoxidharz migriert aus dem Polyurethan während der 7-tägigen Lagerung heraus. Teilweise wurde dieser Effekt auch bereits nach dem Entformen festgestellt. B23 zeigt indes, dass durch die Verwendung der erfindungsgemäßen Materialien, eine große Menge an diesen unverträglichen Epoxiden in ein Polyurethansystem eingebracht werden kann. Die Versuche V4 und V5 zeigen, dass die im Stand der Technik offenbarten Kombinationen von Epoxidharzen in Polyolmischungen zu keiner ausreichenden Hydrolysestabilität bei hohen Temperaturen führen. Die erfindungsgemäßen Materialien in B20 bis 22 weisen eine sehr gute Hydrolysestabilität bei höheren Temperaturen auf.

Tabelle 3a

|  | V4 | V5 | V6 | V7 | V8 | V9 | V10 |
|---|---|---|---|---|---|---|---|
| Poly 6 |  |  |  |  |  |  | 82,498 |
| Poly 7 | 73,000 | 65,000 |  |  |  |  |  |
| Epoxid 2 | 15,000 | 15,000 |  |  |  | 82,498 |  |
| Epoxid 5 |  |  | 82,498 |  |  |  |  |
| Epoxid 6 |  |  |  | 82,498 |  |  |  |
| Epoxid 7 |  |  |  |  | 82,498 |  |  |
| Material aus B 10 |  |  |  |  |  |  |  |
| Material aus B 14 |  |  |  |  |  |  |  |
| Material aus B 15 |  |  |  |  |  |  |  |
| Material aus B 16 |  |  |  |  |  |  |  |
| KV | 10,000 | 18,000 | 15,000 | 15,000 | 15,000 | 15,000 | 15,000 |
| ZP | 1,500 | 1,500 | 2,500 | 2,500 | 2,500 | 2,500 | 2,500 |
| DL |  |  |  |  |  |  |  |
| DF | 0,500 | 0,500 |  |  |  |  |  |
| Kat1 |  |  |  |  |  |  |  |
| Kat2 | 0,005 | 0,005 | 0,002 | 0,002 | 0,002 | 0,002 | 0,002 |
|  |  |  |  |  |  |  |  |
| ISO 2 |  |  | X | X | X | X | X |
| ISO 6 | X | X |  |  |  |  |  |
|  |  |  |  |  |  |  |  |
| Index | 103 | 103 | 103 | 103 | 103 | 103 | 103 |
|  |  |  |  |  |  |  |  |

Tabelle 3b

|  | B20 | B21 | B22 | B23 |
|---|---|---|---|---|
| Poly 6 |  |  |  |  |
| Poly 7 |  |  |  |  |
| Epoxid 2 |  |  |  |  |
| Epoxid 5 |  |  |  |  |
| Epoxid 6 |  |  |  |  |

(fortgesetzt)

| | B20 | B21 | B22 | B23 |
|---|---|---|---|---|
| **Epoxid 7** | | | | |
| **Material aus B 10** | | 82,498 | | |
| **Material** | 82,498 | | | |
| **aus B 14** | | | | |
| **Material aus B 15** | | | 82,498 | |
| **Material aus B 16** | | | | 82,498 |
| **KV** | 15,000 | 15,000 | 15,000 | 15,000 |
| **ZP** | 2,500 | 2,500 | 2,500 | 2,500 |
| **DL** | | | | |
| **DF** | | | | |
| **Kat1** | | | | |
| **Kat2** | 0,002 | 0,002 | 0,002 | 0,002 |
| | | | | |
| **ISO 2** | X | X | X | X |
| **ISO 6** | | | | |
| | | | | |
| **Index** | 103 | 103 | 103 | 103 |
| | | | | |

Tabelle 4a

| | V4 | V5 | V6 | V7 | V8 | V9 | V10 |
|---|---|---|---|---|---|---|---|
| **Bemerkungen** | C | C | A | B | A | C | C |
| **Mech. Eigenschaften** | | | | | | | |
| Härte [Shore A] | 85 | 94 | n.B. | 91 | n.B. | 97 | 90 |
| Härte [Shore D] | n.B. | 49 | n.B. | 31 | n.B. | 59 | 38 |
| Zugfestigkeit [MPa] | 12 | 23 | n.B. | 12 | n.B. | 22 | 13 |
| Dehnung [%] | 170 | 170 | n.B. | 90 | n.B. | 90 | 80 |
| **7 Tage Hydrolyse (120 °C)** | | | | | | | |
| Zugfestigkeit [MPa] | 12 (n.B.) | 22 (n.B.) | n.B. | 4 (6) | n.B. | 48 (n.B.) | 4 (8) |
| Dehnung [%] | 150 (n.B.) | 160 (n.B.) | n.B. | 120 (130) | n.B. | 3 (n.B.) | 170 (180) |
| **14 Tage Hydrolyse (120 °C)** | | | | | | | |
| Zugfestigkeit [MPa] | 9 (n.B.) | 18 (n.B.) | n.B. | 2 (3) | n.B. | n.B. | F |
| Dehnung [%] | 170 (n.B.) | 170 (n.B.) | n.B. | 100 (120) | n.B. | n.B. | F |
| **28 Tage Hydrolyse (120 °C)** | | | | | | | |
| Zugfestigkeit [MPa] | 5 (n.B.) | 10 (n.B.) | n.B. | F | n.B. | n.B. | F |
| Dehnung [%] | 150 | 100 | n.B. | F | n.B. | n.B. | F |
| | (n.B.) | (n.B.) | | | | | |

(fortgesetzt)

| 56 Tage Hydrolyse (120 °C) | | | | | | | |
|---|---|---|---|---|---|---|---|
| Zugfestigkeit [MPa] | F | F | n.B. | F | n.B. | n.B. | F |
| Dehnung [%] | F | F | n.B. | F | n.B. | n.B. | F |

Tabelle 4b

| | B20 | B21 | B22 | B23 |
|---|---|---|---|---|
| **Bemerkungen** | C | C | C | D |
| **Mech. Eigenschaften** | | | | |
| Härte [Shore A] | 94 | 96 | 94 | 87 |
| Härte [Shore D] | 45 | 62 | 50 | n.B. |
| Zugfestigkeit [MPa] | 15 | 26 | 20 | 9 |
| Dehnung [%] | 70 | 60 | 60 | 80 |
| **7 Tage Hydrolyse (120 °C)** | | | | |
| Zugfestigkeit [MPa] | 12 (19) | 26 (32) | 16 (27) | n.B. |
| Dehnung [%] | 50 (30) | 40 (40) | 30 (20) | n.B. |
| **14 Tage Hydrolyse (120 °C)** | | | | |
| Zugfestigkeit [MPa] | 9 (16) | 21 (27) | 13 (20) | n.B. |
| Dehnung [%] | 70 (30) | 50 (40) | 30 (20) | n.B. |
| **28 Tage Hydrolyse (120 °C)** | | | | |
| Zugfestigkeit [MPa] | 6 (13) | 16 (20) | 11 (22) | n.B. |
| Dehnung [%] | 70 (40) | 50 (40) | 40 (20) | n.B. |
| **56 Tage Hydrolyse (120 °C)** | | | | |
| Zugfestigkeit [MPa] | 4 (8) | 11 (15) | 9 (20) | n.B. |
| Dehnung [%] | 100 (80) | 90 (70) | 30 (20) | n.B. |

Bemerkungen zur Tabelle:
**A:** Epoxidharz nicht kompatibel mit PU System, Harz migriert (schwitzt) stark aus der Prüfplatte, keine Bestimmung der mechanischen Eigenschaften möglich
**B:** Epoxidharz nicht gut kompatibel mit PU System, Harz migriert (schwitzt) leicht aus der Prüfplatte, Bestimmung der mechanischen Eigenschaften möglich
**C:** Homogenes aussehen, volle mech. Prüfung möglich
**D:** Homogenes aussehen, keine Migration von Umsetzungsprodukt aus IPOX RD 21 und Jeffamin T-5000 aus dem PU-Material
**F:** das Material ist durch die Hydrolyse zerstört - keine Messung der mech. Eigenschaften mehr möglich
**():** der Wert in den Klammern beschreibt den Wert der mechanischen Eigenschaft nach dem trocknen bei 40 °C für min. 16 Stunden
**n.B.** Eigenschaft wurde nicht bestimmt

5. Verarbeitbarkeit der Polyurethane

Ferner weisen die erfindungsgemäßen Materialien deutliche Vorteile in der Verarbeitung gegenüber Elastomeren Epoxidsystemen, wie sie z.B. in WO 2012/030339 beschrieben werden. Die in WO 2012/030339 beschrieben Materialien werden bei höheren Temperaturen verarbeitet und benötigen ebenfalls hohe Formtemperaturen. Da Materialien für die Öl & Gas Industrie oft im Felde appliziert werden (z.B. als Field joint) ist dies sehr schwer zu realisieren. Ferner weisen die Materialien eine lange Entformzeit auf, welches die Systeme wenig wirtschaftlich macht. Die Vorteile der erfindungsgemäßen Materialien soll in den nachfolgenden Beispielen weiter verdeutlicht werden.

Die erfindungsgemäßen Materialien wurde wie folgt hergestellt: Zunächst wurden die Bestandteile der Polyolkomponente (Polyole, Kettenverlängerer, Zeolithpaste, Entschäumer, erfindungsgemäße Umsetzungsprodukte aus Polyetheraminen oder Polyolen und Epoxiden etc.) mittels eines SpeedmixerTM der Firma Haunschild für 20 sec bei 800 RPM und 40 sec bei 2000 RPM gemischt und im Anschluss im Vakuum entgast. Die Polyolmischung von Beispiel B25 wurde anschließend auf eine Temperatur von 50 °C erwärmt. Bei Beispiel B24 wurde bei Raumtemperatur gearbeitet. Der Mischung wurde dann die entsprechende Menge an entgaster Isocyanatkomponente mit einer Temperatur von 25 °C (B24 und B25) zugesetzt und für 40 sec bei 2000 RPM im SpeedmixerTM gemischt. Das Material wurde dann in eine bei Raumtemperatur gelagerte Form mit der Abmessung 5x5x1 cm gegeben und bei Raumtemperatur gelagert. Nach 5 Minuten bei Raumtemperatur wurde minütlich geprüft ob das Material bereits eine ausreichende Härte aufwies, welche mittels einer handelsüblichen Shore A Messuhr bestimmt werden konnte. Zum Zeitpunkt einer messbaren Shore A Härte wurde das Material entformt und anschließend die Härteentwicklung über die Zeit dokumentiert.

Die Herstellung der Elastomeren auf Epoxidbasis wurde analog des Verfahrens, welches in WO 2012/030339 beschrieben ist hergestellt. Dazu wurden die Epoxidprepolymere auf eine Temperatur von 50 °C erwärmt und entgast. Im Anschluss wurde der Aminvernetzer und der Katalysator 2,4,6-tris(dimethylaminomethyl)phenol in der entsprechenden Menge zugesetzt und für 30 Sekunden bei 800 RPM und anschließend für 60 Sekunden bei 2300 RPM mittels eines Speedmixer der Firma Haunschild gemischt und in eine auf 100 °C vorgeheizte Form mit der Abmessung $5 \times 5 \times 1$ cm gegossen und bei 100 °C in einem Heizschrank gelagert. Nach 10 Minuten bei 100 °C wurde minütlich geprüft, ob das Material bereits eine ausreichende Härte aufwies, welche mittels einer handelsüblichen Shore A Messuhr bestimmt werden konnte. Zum Zeitpunkt einer messbaren Shore A Härte wurde das Material entformt und anschließend die Härteentwicklung über die Zeit dokumentiert.

Die nachfolgende Tabelle 5 gibt Aufschluss über die Zusammensetzung der Systeme und die Härteentwicklung über die Zeit.

Tabelle 5

| | B24 | V11 | B25 | V12 |
|---|---|---|---|---|
| **Material aus B 9** | 80,500 | 100 | | |
| **Material aus B 10** | | | 85,493 | 100 |
| **KV** | 17,000 | | 12,000 | |
| **ZP** | 2,000 | | 2,000 | |
| **DL** | 5,000 | | | |
| **DF** | 0,500 | | 0,500 | |
| **Kat2** | 0,002 | | | |
| **AV1** | | 10,5 | | 7,9 |
| **Kat3** | | 2,0 | | 3,2 |
| **Kat4** | | | 0,007 | |
| **ISO 6** | | | 100 | |
| **ISO 7** | 100 | | | |
| **Index** | 103 | - | 103 | - |
| **Zeit [min]** | | **Härte [Shore A]** | | |
| **5** | | | 48 | |
| **7** | 40 | | 54 | |
| **9** | 48 | | 60 | |
| **11** | 52 | | 65 | |
| **13** | 54 | 35 | 73 | 20 |
| **15** | 56 | 38 | 78 | 28 |
| **16** | | 40 | | 33 |
| **17** | 61 | | 84 | |
| **18** | | 42 | | 40 |
| **19** | 67 | | 89 | |
| **20** | | 46 | 92 | 47 |
| **21** | | 73 | | |
| **22** | | | 52 | 51 |
| **24** | | 84 | | |

(fortgesetzt)

| Zeit [min] | Härte [Shore A] | | |
|---|---|---|---|
| 25 | | 55 | 59 |
| 30 | 94 | 67 | 69 |

Die Beispiele zeigen deutlich, dass die erfindungsgemäßen Materialien deutlich schneller Härte aufbauen, welches zu einer schnelleren Entformung und dadurch zu einer höheren Produktivität führt. Ferner können die erfindungsgemäßen Materialien ebenfalls bei niedrigen Formtemperaturen aushärten. Dies ist vorteilhaft, da bei der Verarbeitung im Felde hohe Formtemperaturen nicht einfach zu realisieren sind und sich technologisch als schwierig erweist.

### 6. Versuche zur Hydrolysestabilität

Neben den kürzeren Entformzeiten zeigen die erfindungsgemäßen Materialien eine vergleichbare Hydrolysestabilität, wie die in der Literatur bekannten elastomeren Epoxidharze. Dies soll in den nachfolgenden Beispielen verdeutlicht werden.

Hierzu wurden zunächst die Bestandteile der Polyolkomponente (Polyole, Kettenverlängerer, Zeolithpaste, Entschäumer, erfindungsgemäße Umsetzungsprodukte aus Polyetheraminen oder Polyolen und Polyepoxiden etc.) mittels eines SpeedmixerTM der Firma Haunschild für 20 sec bei 800 RPM und 40 sec bei 2000 RPM gemischt und im Anschluss im Vakuum entgast. Der Mischung wurde dann die entsprechende Menge an entgaster Isocyanatkomponente zugesetzt und für 40 sec bei 2000 RPM im SpeedmixerTM gemischt. Die reaktive Mischung wurde dann in eine auf 70 °C beheizte Form gegeben, um Prüfplatten mit einer Dicke von 2 mm herzustellen. Nach 2 Stunden bei 70 °C wurden die Prüfplatten entformt und nach einer 7-tägigen Lagerung unter Normklima wurden aus diesen Prüfplatten Zugprüfstäbe ausgestanzt und die Zugfestigkeit und Dehnung gemäß DIN 53504 bestimmt. Ein weiterer Teil dieser Zugprüfstäbe wurde dann in künstlichem Seewasser in einem Druckbehälter bei 150 °C gelagert und in bestimmten Abständen wurden Zugprüfstäbe entnommen und die Zugfestigkeit und Dehnung im frisch entnommenen Zustand bestimmt.

Die Herstellung der Elastomeren auf Epoxidbasis wurde analog des Verfahrens, welches in WO 2012/030339 beschrieben ist, hergestellt. Dazu wurden die Epoxidprepolymere auf eine Temperatur von 50 °C erwärmt und entgast. Im Anschluss wurde der Aminvernetzer und der Katalysator 2,4,6-tris(dimethylaminomethyl)phenol in der entsprechenden Menge zugesetzt und für 30 Sekunds bei 800 RPM und anschließend für 60 Sekunden bei 2300 RPM mittels eines Speedmixers der Firma Haunschild gemischt. Die reaktive Mischung wurde dann in eine auf 100 °C beheizte Form gegeben, um Prüfplatten mit einer Dicke von 2 mm herzustellen. Nach 2 Stunden bei 100 °C wurden die Prüfplatten entformt und nach einer 7-tägigen Lagerung unter Normklima wurden aus diesen Prüfplatten Zugprüfstäbe ausgestanzt und die Zugfestigkeit und Dehnung gemäß DIN 53504 bestimmt. Ein weiterer Teil dieser Zugprüfstäbe wurde dann in künstlichem Seewasser in einem Druckbehälter bei 150 °C gelagert und in bestimmten Abständen wurden Zugprüfstäbe entnommen und die Zugfestigkeit und Dehnung im frisch entnommenen Zustand bestimmt.

Die nachfolgende Tabelle 6 gibt Aufschluss über die Ergebnisse. Wie aus den Beispielen hervor geht, zeigen die erfindungsgemäßen Materialien neben der ausgezeichneten Stabilität unter feucht-warmen Bedingungen auch ein deutlich bessere Zugfestigkeiten, als die im Stand der Technik beschriebenen Elastomeren auf Basis von Epoxidharzen, bei einer vergleichbaren Stabilität unter feucht-warmen Bedingungen.

Tabelle 6

| | B26 | V13 |
|---|---|---|
| **Material aus B 10** | 76,665 | 100 |
| **KV** | 16,190 | |
| **ZP** | 1,905 | |
| **DL** | 4,762 | |
| **DF** | 0,476 | |
| **Kat2** | 0,002 | |
| **AV1** | | 7,9 |
| **Kat3** | | 1,6 |
| **ISO 2** | 100 | - |
| **Index** | 103 | - |
| **Mechanische Eigenschaften** | | |
| Zugfestigkeit [MPa] | 25 | 8 |
| Dehnung [%] | 90 | 90 |

(fortgesetzt)

| | B26 | V13 |
|---|---|---|
| **7 Tage Hydrolyse (150 °C)** | | |
| Zugfestigkeit [MPa] | 9 | 2 |
| Dehnung [%] | 150 | 100 |
| **14 Tage Hydrolyse (150 °C)** | | |
| Zugfestigkeit [MPa] | 7 | 2 |
| Dehnung [%] | 220 | 90 |
| **28 Tage Hydrolyse (150 °C)** | | |
| Zugfestigkeit [MPa] | 7 | 2 |
| Dehnung [%] | 220 | 90 |
| **56 Tage Hydrolyse (150 °C)** | | |
| Zugfestigkeit [MPa] | 7 | 2 |
| Dehnung [%] | 220 | 90 |
| **98 Tage Hydrolyse (150 °C)** | | |
| Zugfestigkeit [MPa] | 7 | 2 |
| Dehnung [%] | 200 | 110 |

## 7. Herstellbeispiele

Neben den Umsetzungsprodukten aus Polyetheraminen und Epoxiden können auch Umsetzungsprodukte aus Polyolen und Epoxiden genutzt werden. Dies soll in den nachfolgenden Beispielen erläutert werden:

### 7.1 Beispiel B27:

In einem 1l-Vierhalskolben mit Rührer, Thermofühler, Rückflusskühler, Stopfen und Ölbadheizung wurden 80g Epoxid 8 (Epilox A 19-03, Leuna-Harze, Epoxyäquivalentgewicht =EEW 190) sowie 410,2g Poly 8 (Lupranol 1005/1) eingewogen. Die Mischung wurde homogenisiert und unter N2-Spülung und Rühren auf 110 °C erhitzt. Bei Erreichen der Temperatur wurden 2,0 g Kat 5 als Katalysator zugegeben, eine Probe für die EEW-Bestimmung entnommen und die Reaktionsmischung vorsichtig auf 130 °C erhitzt. Es wurde ein EEW von 1013 g/eq bestimmt. Nach einer Stunde bei Reaktionstemperatur (130 - 135 °C) wurde ein EEW von 2304 g/eq gemessen (2270 g/eq berechnet). Die Reaktionsmischung wurde abgekühlt und bei ca. 70 °C in eine Glasflasche abgefüllt. Es wurde eine leicht trübe, leicht gelbe viskose Flüssigkeit mit folgenden Kenndaten erhalten:

EEW: 2606 g/eq (gemessen)
OH-Zahl: 24 mg KOH/g (berechnet)
Viskosität: 18,5 Pas (bei 22 °C)

### 7.2 Beispiel B28:

In einem 1l-Vierhalskolben mit Rührer, Thermofühler, Rückflusskühler, Stopfen und Ölbadheizung wurden 200g Epoxid 8 (Epilox A 19-03, Leuna-Harze, EpoxidÄquivalentgewicht =EEW 190) sowie 410,2g Poly 8 (Lupranol 1005/1) eingewogen. Die Mischung wurde homogenisiert und unter N2-Spülung und Rühren auf 110 °C erhitzt. Bei Erreichen der Temperatur wurden 2,4g Kat 5 als Katalysator zugegeben, eine Probe für die EEW-Bestimmung entnommen und die Reaktionsmischung vorsichtig auf 130 °C erhitzt. Es wurde ein EEW von 580 bestimmt. Nach einer Stunde bei Reaktionstemperatur (130 - 135 °C) wurde ein EEW von 773 gemessen (720 g/eq berechnet). Die Reaktionsmischung wurde abgekühlt und bei ca. 70 °C in eine Glasflasche abgefüllt. Es wurde eine klare, leicht gelbe und leicht viskose Flüssigkeit mit folgenden Kenndaten erhalten:

EEW: 825 g/eq (gemessen)
OH-Zahl: 19 mg KOH/g (berechnet)
Viskosität: 3,7 Pas (bei 22 °C)

### 7.3 Beispiel B29

In einem 3l-Laborreaktor, ausgestattet mit 3 -Stufen MIG-Rührer, Thermofühler, Rückflusskühler, Ölheizung wurden 1600,5g Bisphenol-A-Diglycidylether (Epilox A 19-03, Leuna-Harze, Epoxyäquivalentgewicht =EEW 190) sowie 381,2g Poly10 (Lupranol 1200, BASF, OHZ 248) eingewogen. Die Mischung wurde homogenisiert und unter N2-Spülung und Rühren auf 110 °C erhitzt. Bei Erreichen der Temperatur wurden 6,0g $BF_3$-Aminkomplex (Anchor 1040, Air-Products) als Katalysator zugegeben, eine Probe für die EEW-Bestimmung entnommen und die Reaktionsmischung vorsichtig auf 130 °C erhitzt. Es wurde ein EEW von 218,9 (7,31 % EpO) bestimmt. Die einsetzende Exothermie wurde durch Absenken der Ölheizung abgefangen und die Reaktionstemperatur zwischen 130 und 135 °C gehalten. Nach einer Stunde bei Reaktionstemperatur wurde ein EEW von 287,4 (5,58 % EpO) gemessen. Nach einer weiteren Stunde betrugt das EEW 295,5 (5,41 % EpO) Die Reaktionsmischung wurde abgekühlt und bei ca. 70 °C abgefüllt. Es wurde eine klare, leicht gelbe und viskose Flüssigkeit mit folgenden Kenndaten erhalten:

EEW: 296 g/eq (gemessen)
OH-Zahl: 67,3 mg KOH/g
Viskosität: 36 Pas (bei 22 °C)

### 7.4. Beispiel B30

In einem 3l-Laborreaktor, ausgestattet mit 3-Stufen MIG-Rührer, Thermofühler, Rückflusskühler, Ölheizung wurden 872,0g Bisphenol-A-Diglycidylether (Epilox A 19-03, Leuna-Harze, Epoxyäquivalentgewicht =EEW 190) sowie 1143,0g Poly 11 (Lupranol 2010/1, BASF, OHZ 45) eingewogen. Die Mischung wurde homogenisiert und unter N2-Spülung und Rühren auf 110 °C erhitzt. Bei Erreichen der Temperatur wurden 6,16g $BF_3$-Aminkomplex (Anchor 1040, Air-Products) als Katalysator zugegeben, eine Probe für die EEW-Bestimmung entnommen und die Reaktionsmischung vorsichtig auf 130 °C erhitzt. Es wurde ein EEW von 428,6 (3,37 % EpO) bestimmt. Die einsetzende Exothermie wurde durch Absenken der Ölheizung abgefangen und die Reaktionstemperatur zwischen 130 und 135 °C gehalten. Nach einer Stunde bei Reaktionstemperatur wurde ein EEW von 466,6 (3,43 % EpO) gemessen. Nach zwei weiteren Stunden betrugt das EEW 546,2 (2,93 % EpO) Die Reaktionsmischung wurde abgekühlt und bei ca. 70 °C abgefüllt. Es wurde eine klare, leicht rötlich gelbe und leicht viskose Flüssigkeit mit folgenden Kenndaten erhalten:

EEW: 548 g/eq (gemessen)
Viskosität :17,7 Pas (bei 22 °C)
OH-Zahl: 36,6 mg KOH/g

### 7.5. Beispiel B 31

In einem 3l-Laborreaktor, ausgestattet mit 3-Stufen MIG-Rührer, Thermofühler, Rückflusskühler, Ölheizung wurden 670,4g Bisphenol-A-Diglycidylether (Epilox A 19-03, Leuna-Harze, Epoxyäquivalentgewicht =EEW 190) sowie 1410,3g Poly6 (Lupranol 2090, BASF, OHZ 28) eingewogen. Die Mischung wurde homogenisiert und unter N2-Spülung und Rühren auf 110 °C erhitzt. Bei Erreichen der Temperatur wurden 6,3g $BF_3$-Aminkomplex (Anchor 1040, Air-Products) als Katalysator zugegeben, eine Probe für die EEW-Bestimmung entnommen und die Reaktionsmischung vorsichtig auf 130 °C erhitzt. Es wurde ein EEW von 573 (2,79 % EpO) bestimmt. Die einsetzende Exothermie wurde durch Absenken der Ölheizung abgefangen und die Reaktionstemperatur zwischen 130 und 135 °C gehalten. Nach einer Stunde bei Reaktionstemperatur wurde ein EEW von 632 ( 2,53 % EpO) gemessen. Nach weiteren 1,5 Stunden Reaktionszeit betrugt das EEW 884 (1,81 % EpO) Die Reaktionsmischung wurde abgekühlt und bei ca. 70 °C abgefüllt. Es wurde eine klare, leicht gelbe und sehr viskose Flüssigkeit mit folgenden Kenndaten erhalten:

EEW :941 g/eq (gemessen)
Viskosität: 268 Pas (bei 22 °C)
OH-Zahl: 29,4 mg KOH/g

Auch die erfindungsgemäßen Umsetzungsprodukte auf Basis von Polyolen und Epoxiden können als Rohstoffe für die Herstellung der erfindungsgemäßen Polyurethane.

Hierzu wurden zunächst die Bestandteile der Polyolkomponente (Polyole, Kettenverlängerer, Zeolithpaste, Entschäumer, erfindungsgemäße Umsetzungsprodukte aus Polyolen und Polyepoxiden etc.) mittels eines SpeedmixerTM der Firma Haunschild für 20 sec bei 800 RPM und 40 sec bei 2000 RPM gemischt und im Anschluss im Vakuum entgast und auf 50 °C erwärmt. Der Mischung wurde dann die entsprechende Menge an entgaster Isocyanatkomponente (50 °C) zugesetzt und für 40 sec bei 2000 RPM im SpeedmixerTM gemischt. Die reaktive Mischung wurde dann in eine auf 50 °C beheizte Form gegeben, um Prüfplatten mit einer Dicke von 2 mm herzustellen. Nach dem Gießen wurde die Temperatur auf 80 °C erhöht und die Materialien 2 Stunden bei dieser Temperatur gelagert. Danach wurden die Prüfplatten entformt und nach einer 7-tägigen Lagerung unter Normklima wurden aus diesen Prüfplatten Zugprüfstäbe ausgestanzt und die Zugfestigkeit und Dehnung gemäß DIN 53504 bestimmt. Ein weiterer Teil dieser Zugprüfstäbe wurde dann für 5, 10 bzw. 15 Stunden bei 130 °C in Wasserdampf gelagert und anschließend die Zugfestigkeit und Dehnung gemäß DIN 53504 bestimmt.

Tabelle 7

| | B32 | B33 | B34 |
|---|---|---|---|
| **Poly 9** | | 5,000 | |
| **Material aus B 27** | 81,000 | | |
| **Material aus B 28** | | 76,000 | |
| **Material aus B 30** | | | 81,000 |
| **KV** | 15,000 | 15,000 | 15,000 |
| **ZP** | 3,500 | 3,500 | 3,500 |
| **DF** | 0,500 | 0,500 | 0,500 |
| **Kat2 Kat6** | 0,001 | 0,001 | 0,003 |
| **ISO 4** | X | X | X |
| **Index** | 103 | 103 | 103 |
| **0h 130 °C/Wasserdampf** | | | |
| Zugfestigkeit [MPa] | 7 | 18 | 23 |
| Dehnung [%] | 70 | 80 | 140 |
| **5h 130 °C/Wasserdampf** | | | |
| Zugfestigkeit [MPa] | 12 | 30 | 35 |
| Dehnung [%] | 80 | 80 | 80 |
| **10h 130 °C/Wasserdampf** | | | |
| Zugfestigkeit [MPa] | 15 | 23 | 40 |
| Dehnung [%] | 100 | 80 | 80 |
| **15h 130 °C/Wasserdampf** | | | |
| Zugfestigkeit [MPa] | 17 | 35 | 39 |
| Dehnung [%] | 120 | 70 | 80 |

## 8. Beispiele zum Stand der Technik (Versuche V14-V16 und B35)

Für die Versuche V14 - V16 & B35 wurden in einen 500 mL Vierhalskolben mit Rührer, Stickstoffeinleitung und Kühler die entsprechenden Mengen an Polyol 6 mit Epoxid 2 vorgelegt und bei Raumtemperatur homogen gemischt. Nach dem homogenen vermischen der Komponenten wurde eine Probe gezogen um die Viskosität der Mischung bei 23°C zu bestimmen. Als dann wurden die Temperatur bei den Versuchen V14 & V15 auf 60°C erhöht und 3h bei dieser Temperatur gehalten, analog wie es in US 4647624 Beispiel 2 beschrieben wurde. Nach den 3 Stunden wurde die Mischung abgekühlt und die Viskosität erneut bestimmt. Ähnlich wurde bei V16 & B35 vorgegangen, jedoch wurde hier eine Temperatur von 130°C für die Synthese verwendet und bei B35 wurde bei Erreichen von 100°C der Kat 5 der Mischung zugesetzt. Nach 3 Stunden bei 130°C wurden die Materialien aus V16 & B35 abgekühlt und die Viskosität der Mischung bei 23°C erneut bestimmt.

Tabelle 8

| | V14 | V15 | V16 | B35 |
|---|---|---|---|---|
| **Poly 6** | 285,00g | 180,00g | 180,00g | 179,25g |
| **Epoxid 2** | 15,00g | 120,00g | 120,00g | 120,00g |
| **Kat 5** | | | | 0,75g |
| **Viskosität bei 23°C nach mischen [mPas]** | 1290 | 2670 | 2670 | 2650 |
| **Viskosität bei 23°C nach 3h / 60°C [mPas]** | 1300 | 2580 | | |
| **Viskosität bei 23°C nach 3h / 130°C [mPas]** | | | 2560 | 6760 |

Wie aus den Vergleichsbeispielen V14 - V16 ersichtlich ist, ändert sich die Viskosität der Mischung nicht, da keine signifikante Reaktion zwischen Polyol & Polyepoxid stattfindet. Im Falle von B35 ist ein deutlicher Anstieg der Viskosität zu beobachten. Dies bedeutet, dass in den von US 4647624 beschrieben Beispielen keine der erfindungsgemäßen Strukturen erzeugt wurden, sondern es sich weiterhin um eine Mischung von Polyol und Polyepoxid handelt, analog wie es in den Vergleichsbeispielen V4 & V5 beschrieben wurden. Die Materialien welche in V4 & V5 beschrieben werden spiegeln den Stand der Technik wieder und zeigen schlechte Langzeithydrolyse Eigenschaften.

Ferner wird aus den Beispielen V14 - V16 und B35 ersichtlich, dass für die Herstellung der erfindungsgemäßen Reaktionsprodukte aus Polyetherolen und Polyepoxiden ein entsprechender Katalysator benötigt wird.

## Patentansprüche

1. Verfahren zur Herstellung eines Polyurethans, umfassend die Umsetzung mindestens der folgenden Komponenten:

   (i) Zusammensetzung (Z1) mindestens umfassend eine gegenüber Isocyanaten reaktive Verbindung (P1), und
   (ii) Zusammensetzung (Z2), mindestens umfassend ein Polyisocyanat,
   wobei die Verbindung (P1) erhältlich oder erhalten ist durch die Umsetzung mindestens eines Polyepoxids mit einer Verbindung (V1) ausgewählt aus der Gruppe bestehend aus Polyetheraminen und Polyetherolen, wobei beim Einsatz von Polyetherolen ein Katalysator eingesetzt wird, und
   wobei das Verhältnis der NH- bzw. OH-Gruppen zu Epoxidgruppen im Bereich von 1:1,5 bis 1:75 liegt.

2. Verfahren zur Herstellung eines Polyurethans gemäß Anspruch 1, wobei bei der Umsetzung neben den Komponenten (i) und (ii) mindestens eine der folgenden Komponenten eingesetzt wird:

   (iii) eine weitere gegenüber Isocyanaten reaktive Verbindung,
   (iv) ein Kettenverlängerer,
   (v) weitere Additive.

3. Verfahren zur Herstellung eines Polyurethans gemäß Anspruch 1 oder 2, wobei die Verbindung (P1) eine theoretisch berechnete OH-Zahl im Bereich von 0,5 mg KOH/g bis 75 mg KOH/g aufweist.

4. Verfahren zur Herstellung eines Polyurethans gemäß einem der Ansprüche 1 bis 3, wobei die Verbindung (P1) ein theoretisch berechnetes Epoxyäquivalentgewicht im Bereich von 180 bis 5000 g/eq aufweist.

5. Verfahren zur Herstellung eines Polyurethans gemäß einem der Ansprüche 1 bis 4, wobei die Verbindung (V1) ein Polyetheramin mit einem Molekulargewicht im Bereich von 500 bis 30000 g/mol ist.

6. Verfahren zur Herstellung eines Polyurethans gemäß einem der Ansprüche 1 bis 5, wobei die Verbindung (V1) ein Polyetherol mit einem Molekulargewicht im Bereich von 500 bis 30000 g/mol ist.

7. Verfahren zur Herstellung eines Polyurethans gemäß einem der Ansprüche 1 bis 6, wobei das Polyisocyanat ein aromatisches Polyisocyanat ist.

8. Verfahren zur Herstellung eines Polyurethans gemäß einem der Ansprüche 1 bis 7, wobei das Polyisocyanat einen NCO-Gehalt von 2 bis 33,5 % aufweist.

9. Verfahren zur Herstellung eines Polyurethans gemäß einem der Ansprüche 1 bis 8, wobei ein Katalysator eingesetzt wird.

10. Verfahren zur Herstellung eines Polyurethans gemäß einem der Ansprüche 1 bis 9, wobei der Anteil an Katalysatoren in der Zusammensetzung (Z1) im Bereich von 0,00001 Gew.-% bis 5 Gew.-% liegt.

11. Polyurethan, erhältlich oder erhalten nach einem Verfahren gemäß einem der Ansprüche 1 bis 10.

12. Polyurethan gemäß Anspruch 11, wobei das Polyurethan ein kompaktes Polyurethan ist.

13. Polyurethan gemäß Anspruch 11 oder 12, wobei das Polyurethan ein Gießelastomer ist.

14. Verwendung eines Polyurethans, erhältlich oder erhalten nach einem Verfahren gemäß einem der Ansprüche 1 bis 10, oder eines Polyurethans gemäß einem der Ansprüche 11 bis 13 zur Beschichtung von Rohrleitungen, als field joint oder für Unterwassertechnik (subsea equipment) für den Off-Shore-Bereich.

15. Verwendung eines Polyurethans, erhältlich oder erhalten nach einem Verfahren gemäß einem der Ansprüche 1 bis 10, oder eines Polyurethans gemäß einem der Ansprüche 11 bis 13 als Glas-syntaktisches Polyurethan.

**Claims**

1. A process for preparing a polyurethane, comprising the reaction of at least the following components:

   (i) composition (Z1) at least comprising a compound (P1) reactive toward isocyanates, and
   (ii) composition (Z2) at least comprising a polyisocyanate,
   wherein compound (P1) is obtainable or has been obtained by the reaction of at least one polyepoxide with a compound (V1) selected from the group consisting of polyetheramines and polyetherols, wherein a catalyst is used when polyetherols are used, and
   wherein the ratio of the NH or OH groups to epoxy groups is in the range from 1:1.5 to 1:75.

2. The process for preparing a polyurethane according to claim 1, wherein at least one of the following components is used in the reaction in addition to components (i) and (ii):

   (iii) a further compound reactive toward isocyanates,
   (iv) a chain extender,
   (v) further additives.

3. The process for preparing a polyurethane according to claim 1 or 2, wherein compound (P1) has a theoretically calculated OH number in the range from 0.5 mg KOH/g to 75 mg KOH/g.

4. The process for preparing a polyurethane according to any of claims 1 to 3, wherein compound (P1) has a theoretically calculated epoxy equivalent weight in the range from 180 to 5000 g/eq.

5. The process for preparing a polyurethane according to any of claims 1 to 4, wherein compound (V1) is a polyetheramine having a molecular weight in the range from 500 to 30 000 g/mol.

6. The process for preparing a polyurethane according to any of claims 1 to 5, wherein compound (V1) is a polyetherol having a molecular weight in the range from 500 to 30 000 g/mol.

7. The process for preparing a polyurethane according to any of claims 1 to 6, wherein the polyisocyanate is an aromatic polyisocyanate.

8. The process for preparing a polyurethane according to any of claims 1 to 7, wherein the polyisocyanate has an NCO content of 2% to 33.5%.

9. The process for preparing a polyurethane according to any of claims 1 to 8, wherein a catalyst is used.

10. The process for preparing a polyurethane according to any of claims 1 to 9, wherein the proportion of catalysts in composition (Z1) is in the range from 0.00001% by weight to 5% by weight.

11. A polyurethane obtainable or obtained by a process according to any of claims 1 to 10.

12. The polyurethane according to claim 11, wherein the polyurethane is a compact polyurethane.

13. The polyurethane according to claim 11 or 12, wherein the polyurethane is a cast elastomer.

14. The use of a polyurethane obtainable or obtained by a process according to any of claims 1 to 10, or of a polyurethane according to any of claims 11 to 13, for coating of pipelines, as a field joint or for subsea equipment for the offshore sector.

**15.** The use of a polyurethane obtainable or obtained by a process according to any of claims 1 to 10, or of a polyurethane according to any of claims 11 to 13, as a glass-syntactic polyurethane.

**Revendications**

**1.** Procédé de fabrication d'un polyuréthane, comprenant la réaction d'au moins les composants suivants :

(i) composition (Z1) comprenant au moins un composé (P1) réactif vis-à-vis des isocyanates, et
(ii) composition (Z2), comprenant au moins un polyisocyanate,

dans lequel le composé (P1) peut être obtenu ou est obtenu par réaction d'au moins un polyépoxyde avec un composé (V1) choisi dans le groupe consistant en les polyétheramines et les polyétherols, un catalyseur étant utilisé lors de l'utilisation de polyétherols, et dans lequel le rapport des groupes NH ou OH aux groupes époxyde est compris dans la plage de 1:1,5 à 1:75.

**2.** Procédé de fabrication d'un polyuréthane selon la revendication 1, dans lequel, lors de la réaction, on utilise outre les composants (i) et (ii) au moins l'un des composants suivants :

(iii) un autre composé réactif vis-à-vis des isocyanates,
(iv) un prolongateur de chaîne,
(v) d'autres additifs.

**3.** Procédé de fabrication d'un polyuréthane selon la revendication 1 ou 2, dans lequel le composé (P1) présente un indice d'OH théorique dans la plage de 0,5 mg KOH/g à 75 mg KOH/g.

**4.** Procédé de fabrication d'un polyuréthane selon l'une des revendications 1 à 3, dans lequel le composé (P1) présente une masse équivalente d'époxy théorique dans la plage de 180 à 5 000 g/éq.

**5.** Procédé de fabrication d'un polyuréthane selon l'une des revendications 1 à 4, dans lequel le composé (V1) est une polyétheramine ayant une masse moléculaire dans la plage de 500 à 30 000 g/mol.

**6.** Procédé de fabrication d'un polyuréthane selon l'une des revendications 1 à 5, dans lequel le composé (V1) est un polyétherol ayant une masse moléculaire dans la plage de 500 à 30 000 g/mol.

**7.** Procédé de fabrication d'un polyuréthane selon l'une des revendications 1 à 6, dans lequel le polyisocyanate est un polyisocyanate aromatique.

**8.** Procédé de fabrication d'un polyuréthane selon l'une des revendications 1 à 7, dans lequel le polyisocyanate présente une teneur en NCO de 2 à 33,5 %.

**9.** Procédé de fabrication d'un polyuréthane selon l'une des revendications 1 à 8, dans lequel on utilise un catalyseur.

**10.** Procédé de fabrication d'un polyuréthane selon l'une des revendications 1 à 9, dans lequel la proportion des catalyseurs dans la composition (Z1) est comprise dans la plage de 0,00001 % en poids à 5 % en poids.

**11.** Polyuréthane pouvant être obtenu ou obtenu par un procédé selon l'une des revendications 1 à 10.

**12.** Polyuréthane selon la revendication 11, le polyuréthane étant un polyuréthane compact.

**13.** Polyuréthane selon la revendication 11 ou 12, le polyuréthane étant un élastomère de coulée.

**14.** Utilisation d'un polyuréthane pouvant être obtenu ou obtenu par un procédé selon l'une des revendications 1 à 10, ou d'un polyuréthane selon l'une des revendications 11 à 13, pour revêtir des tuyauteries, en tant que raccord de canalisation ou pour la technique sous-marine (subsea equipment) pour le domaine en mer.

**15.** Utilisation d'un polyuréthane pouvant être obtenu ou obtenu par un procédé selon l'une des revendications 1 à 10, ou d'un polyuréthane selon l'une des revendications 11 à 13, en tant que polyuréthane syntactique à charge de verre.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005056629 A
- WO 2007042411 A
- WO 9903922 A
- WO 2010003788 A
- WO 2011161047 A
- US 4647624 A
- WO 2012030339 A
- EP 0510265 A
- DE 10256550
- WO 2004003424 A
- US 6000438 A
- WO 2002016733 A
- CN 101545565
- WO 2011003529 A

**In der Beschreibung aufgeführte Nicht-Patentliteratur**

- **H. LEE ; K. NEVILLE.** Handbook of Epoxy Resins. McGraw-Hill Book Company
- Polyurethane. Kunststoffhandbuch. Carl Hanser Verlag, 1993, vol. 7
- Kunststoffhandbuch. Carl Hanser Verlag, 1966, vol. VII, 103-113